# EUROPEAN PATENT SPECIFICATION

(11) **EP 4 207 871 B1**
(45) Date of publication and mention of the grant of the patent: **24.12.2025**
(21) Application number: 20954761.1
(22) Date of filing: 28.09.2020
(51) Int. Cl.: H04W 36/08, H04W 36/00, H04W 36/02, H04W 88/04, H04B 7/15, H04L 1/1829, H04L 1/00

(54) **COMMUNICATION METHOD AND APPARATUS**
KOMMUNIKATIONSVERFAHREN UND -VORRICHTUNG
PROCÉDÉ ET APPAREIL DE COMMUNICATION

(43) Date of publication of application: 05.07.2023
(73) Proprietor: Huawei Technologies Co., Ltd., Shenzhen, Guangdong 518129 (CN)
(72) Inventor: FAN, Qiang, Shenzhen, Guangdong 518129 (CN)
(74) Representative: Isarpatent
(86) International application number: PCT/CN2020/118492
(87) International publication number: WO 2022/061913

(56) References cited:
- WO-A1-2018/171881
- WO-A1-2018/201498
- WO-A1-2019/137443
- CN-A- 111 586 765
- RESEARCH IN MOTION UK LIMITED: "Joint PDCP protocols on Uu and Un interfaces to improve type-I relay handover", 3GPP DRAFT; R2-093735, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Los Angeles, USA; 20090622, 22 June 2009 (2009-06-22), XP050351968
- NOKIA ET AL: "Data lossless path switch", vol. RAN WG2, no. Hangzhou, China; 20170515 - 20170519, 14 May 2017 (2017-05-14), XP051274904, Retrieved from the Internet <URL:http://www.3gpp.org/ftp/Meetings_3GPP_SYNC/RAN2/Docs/> [retrieved on 20170514]
- "3rd Generation Partnership Project; Technical Specification Group Radio Access Network; Study on further enhancements to LTE Device to Device (D2D), User Equipment (UE) to network relays for Internet of Things (IoT) and wearables; (Release 14)", 17 April 2017 (2017-04-17), XP051263453, Retrieved from the Internet <URL:http://www.3gpp.org/ftp/tsg_ran/WG2_RL2/TSGR2_97bis/Docs/> [retrieved on 20170417]
- PANASONIC ET AL: "Correction of PDCP status report", 3GPP DRAFT; R5-095037 - STATUS REPORT V2.4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. Shenzhen; 20090824 - 20090828, 27 August 2009 (2009-08-27), XP050616979

## Description

### TECHNICAL FIELD

This application relates to the communication field, and in particular, to a communication method and apparatus.

### BACKGROUND

The document "Joint PDCP protocols on Uu and Un interfaces to improve type-I relay handover", RESEARCH IN MOTION UK LIMITED, 3GPP DRAFT; R2-093735, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, (20090622), no. Los Angeles, USA describes an approach on Uu and Un interface to improve relay handover performance.

The document "Data lossless path switch", OKIA ET AL, vol. RAN WG2, no. Hangzhou, China; 20170515 - 20170519, 3GPP DRAFT; R2-1704329_DATA_LOSSLESS_PATH_SWITCH_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/Meetings_3GPP_SYNC/RAN2/Docs/, describes a scenario where a remote UE switches its path from PC5 2 Uu also had identified issue concerns service continuity.

The document "3rd Generation Partnership Project; Technical Specification Group Radio Access Network; Study on further enhancements to LTE Device to Device (D2D), User Equipment (UE) to network relays for Internet of Things (IoT) and wearables; (Release 14)", (20170417), 3GPP DRAFT; R2-1703973 TR 36.746 V0.5.0, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL: http://www.3gpp.org/ftp/tsg_ran/WG2_RL2/TSGR2_97bis/Docs/ addresses power efficiency for evolved ProSe Remote UEs such as wearable devices.

The document PANASONIC ET AL, "Correction of PDCP status report", 3GPP DRAFT; R5-095037 - STATUS REPORT V2.4, 3RD GENERATION PARTNERSHIP PROJECT (3 GPP), MOBILE COMPETENCE CENTRE ; 650, ROUTE DES LUCIOLES ; F-06921 SOPHIA-ANTIPOLIS CEDEX ; FRANCE, (20090827), vol. RAN WG5, no. Shenzhen describes an approach for PDCP status report took on why the information on missing acknowledged PDCP SDUs at handover.

Vehicle-to-everything (vehicle-to-everything, V2X) is interconnection between a vehicle and the outside world, for example, interconnection and communication between vehicles, a vehicle and a pedestrian, a vehicle and a roadside infrastructure, and a vehicle and a network, implemented by using an apparatus configured on the vehicle and various communication technologies. The 3rd Generation Partnership Project (3rd Generation Partnership Project, 3GPP) International Organization for Standardization discussed the standardization of NR V2X in new radio (new radio, NR) R16, and NR V2X is further researched and standardized based on long term evolution (long term evolution, LTE) V2X. A communication architecture of NR V2X includes two communication interfaces: a PC5 interface and a Uu interface. The NR PC5 interface is a direct communication interface between V2X user equipments (user equipments, UEs), and a direct communication link between V2X UEs is also defined as a sidelink (sidelink, SL).

In standard initiation discussion of NR R17, two sidelink relay scenarios are considered: UE-to-Network relay and UE-to-UE relay. UE-to-Network relay mainly aims to resolve a problem of insufficient network coverage. A remote terminal remote UE located at the edge of cell coverage or outside a cell may perform data transmission with an access network device through relay by a relay node, thereby enhancing network coverage. During UE-to-Network relay communication, there is one remote UE and one or more relay terminals (for example, relay UEs). Data and signaling may be transmitted between the remote terminal and the access network device by using the relay terminal. Both the remote terminal and the relay terminal move. Therefore, in a movement process, when the remote terminal finds that a link between the remote terminal and the relay terminal deteriorates, and a link between the remote terminal and another relay terminal is better or a direct link between the remote terminal and the access network device/peer UE is better, the remote terminal may communicate with the access network device/peer UE by using the another relay terminal, or may directly communicate with the access network device/peer UE. This process is similar to UE handover on the Uu interface and is sometimes referred to as path switch.

In a scenario in which the UE directly communicates with the access network device, if a radio link control (radio link control, RLC) status report received by the UE indicates that a packet is successfully transmitted on an RLC layer entity, the packet is definitely successfully transmitted to the access network device. However, in a relay scenario such as a sidelink relay scenario in which a packet needs to be relayed, a packet sent by a packet data convergence protocol (packet data convergence protocol, PDCP) layer entity on a transmit side needs to be transmitted through two hops to reach a PDCP layer entity on a receive side. In this case, an RLC status report received by the transmit side indicates that the packet is successfully transmitted on the RLC layer entity, but does not indicate that the packet is successfully transmitted to the receive side. Therefore, if the remote terminal switches to another access network device, that is, a packet is transmitted after path switching/path switch occurs, the packet may be lost in a transmission process.

### SUMMARY

The invention is defined by the appended claims.

Embodiments of this application provide a communication method and apparatus, to resolve a problem that a packet is lost when a terminal performs path switching/path switch in a relay scenario such as sidelink relay scenario in which a packet needs to be relayed, thereby improving data transmission efficiency.

To achieve the foregoing objective, this application uses the following technical solutions. Hereinafter, before coming to a detailed description of the embodiments of the invention with reference to the attached drawings, some general aspects which are useful for contributing to the understanding of the inventive details in these embodiments are described below separately.

According to a first aspect, this application provides a communication method. The method may be applied to a remote terminal, or may be applied to a chip or a processor in the remote terminal. For example, this method is described by using the remote terminal as an example. The communication method includes: receiving, by a remote terminal, first indication information from a relay terminal, where the first indication information indicates that the relay terminal has received first data, and the first data is data sent to a first access network device; receiving, by the remote terminal, second indication information, where the second indication information indicates whether the first access network device receives the first data; determining, by the remote terminal, second data based on the second indication information, where the second data includes data that is in the first data and that is not received by the first access network device; and sending, by the remote terminal, the second data to the relay terminal or the second access network device.

Based on the communication method in the first aspect, the remote terminal sends the indication information to a PDCP layer entity only after confirming that data has been successfully transmitted to the access network device, to indicate that data transmission succeeds. When the remote terminal performs path switching and switches from the first access network device to the second access network device, data that is not successfully transmitted to the access network device is resent by the remote terminal to the access network device, so that the data that is not successfully transmitted to the access network device is not missed, thereby avoiding a data loss. In this way, lossless transmission of downlink data during terminal switching in a relay scenario is implemented, and service continuity is ensured.

In a possible design, the determining, by the remote terminal, second data based on the second indication information includes: determining, by the remote terminal, the second data based on the first indication information and the second indication information. Based on this, the remote terminal can learn of, based on the indication information fed back by the relay terminal, whether the first access network device receives the first data. In a possible design, the method may further include: after the remote terminal switches from the first access network device to the second access network device, sending, by the remote terminal, the second data to the relay terminal or the second access network device. Based on this, after the remote terminal performs path switching, the remote terminal can continue to exchange data with the second access network device, and upload the data to a network side.

In a possible design, the method may further include: the second indication information is from the relay terminal or the first access network device. Based on this, after receiving the second indication information from the relay terminal or the first access network device, the remote terminal can learn of a data receiving status on the network side.

In a possible design, the method may further include: the first indication information is included in a radio link control RLC control PDU, where the first indication information includes a first identifier of the first data and reception acknowledgement information of the first data, and the reception acknowledgement information of the first data indicates whether the relay terminal successfully receives each piece of data in the first data; and the second indication information is included in a packet data convergence protocol PDCP control PDU, where the second indication information includes a second identifier of the first data, and the second indication information indicates whether the first access network device successfully receives each piece of data in the first data. Based on this, the remote terminal can determine, by receiving the RLC control PDU, whether the access network device successfully receives the first data, or the remote terminal can determine, by using a relay function of the relay terminal, whether the access network device successfully receives the first data.

In a possible design, the method may further include: the first identifier includes a serial number of the first data; and the second identifier includes a count COUNT value or a sequence number SN of the first data. Based on this, the remote terminal can quickly determine the first data based on the serial number, the count COUNT value, or the sequence number SN of the first data.

In a possible design, the method may further include: receiving, by the remote terminal, configuration information of a first function from the first access network device, where the first function is used by the remote terminal to determine third indication information based on the first indication information and/or the second indication information, and the third indication information indicates data that is in the first data and that is successfully received by the first access network device. Based on this, the remote terminal can feed back the third indication information to the PDCP layer entity, so that the PDCP layer entity obtains an identifier of the data that is in the first data and that has been successfully transmitted to the first access network device.

In a possible design, the method may further include: determining, by the remote terminal, the second data based on the third indication information. Based on this, the remote terminal can determine data that is in the first data and that needs to be sent to the second access network device again, determine the data as the second data, and then send the second data to the second access network device.

According to a second aspect, a communication method is provided. The method may be applied to a first access network device, or may be applied to a chip or a processor in the first access network device. For example, the method is described by using the first access network device as an example. The communication method includes: receiving, by a first access network device, first indication information from a relay terminal, wherein the first indication information indicates that the relay terminal has received first data, and the first data is data sent to a remote terminal; receiving, by the first access network device, second indication information, where the second indication information indicates whether the remote terminal receives the first data; determining, by the first access network device, second data based on the second indication information, where the second data includes data that is in the first data and that is not received by the remote terminal; and sending, by a second access network device, the second data to the relay terminal or the remote terminal.

Based on the communication method in the second aspect, the first access network device sends the indication information to a PDCP layer entity only after confirming that the data has been successfully transmitted to the remote terminal, to indicate that data transmission succeeds. When the remote terminal performs path switching and switches from the first access network device to the second access network device, data that is not successfully transmitted to the remote terminal is resent by the second access network device to the remote terminal, so that the data that is not successfully transmitted to the remote terminal is not missed, thereby avoiding a data loss. In this way, lossless transmission of downlink data during terminal switching in a relay scenario is implemented, and service continuity is ensured.

In a possible design, the determining, by the first access network device, second data based on the second indication information includes: determining, by the first access network device, the second data based on the first indication information and the second indication information. Based on this, the first access network device can learn of, based on the indication information fed back by the relay terminal, whether the remote terminal receives the first data.

In a possible design, the method may further include: after the remote terminal switches from the first access network device to a second access network device, sending, by the second access network device, the second data to the relay terminal or the remote terminal. Based on this, after the remote terminal performs path switching, the remote terminal can continue to exchange data with the second access network device, and upload the data to a network side.

In a possible design, the method may further include: the second indication information is from the relay terminal or the remote terminal. Based on this, after receiving the second indication information from the relay terminal or the first access network device, the remote terminal can learn of a data receiving status on the network side.

In a possible design, the method may further include: the first indication information is included in an RLC control PDU, where the first indication information includes a first identifier of the first data and reception acknowledgement information of the first data, and the reception acknowledgement information of the first data indicates whether the relay terminal successfully receives data corresponding to each count value or sequence number in the first data; and the second indication information is included in a PDCP control PDU, where the second indication information includes a second identifier of the first data. Based on this, the remote terminal can determine, by receiving the RLC control PDU, whether the access network device successfully receives the first data, or the remote terminal can determine, by using a relay function of the relay terminal, whether the access network device successfully receives the first data.

In a possible design, the method may further include: the first identifier includes a serial number of the first data; and the second identifier includes a count COUNT value or a sequence number SN of the first data. Based on this, the first access network device can quickly determine the first data based on the serial number, the count COUNT value, or the sequence number SN of the first data.

In a possible design, the method may further include: sending, by the first access network device, configuration information of a second function to the relay terminal, where the second function is used by the relay terminal to send the second indication information to the first access network device. Based on this, the relay terminal can configure the second function, and feed back, to the first access network device, a result of transmitting the first data between the relay terminal and the remote terminal.

In a possible design, the method may further include: determining, by the first access network device, third indication information based on the first indication information and the second indication information, where the third indication information indicates data that is in the first data and that is successfully received by the first access network device. Based on this, the first access network device can feed back the third indication information to the PDCP layer entity, so that the PDCP layer entity obtains an identifier of the data that is in the first data and that has been successfully transmitted to the first access network device.

In a possible design, the method may further include: determining, by the first access network device, the second data based on the third indication information. Based on this, the first access network device can determine data that is in the first data and that needs to be sent to the remote terminal again, determine the data as the second data, and then send the second data to the remote terminal.

According to a third aspect, this application provides a communication method. The method may be applied to a relay terminal, or may be applied to a chip or a processor in the relay terminal. For example, the method is described by using the relay terminal as an example. The communication method includes: sending, by a relay terminal, first indication information to a remote terminal, where the first indication information indicates that the relay terminal has received first data, and the first data is data sent to a first access network device; sending, by the relay terminal, second indication information to the remote terminal, where the second indication information indicates whether the first access network device receives the first data; and sending, by the relay terminal, second data to a second access network device, where the second data includes data that is in the first data and that is not received by the first access network device.

In a possible design, the method may further include: after the remote terminal switches from the first access network device to the second access network device, sending, by the relay terminal, the second data from the remote terminal to the second access network device.

In a possible design, the method may further include: the sending, by the relay terminal, second indication information to the remote terminal specifically includes: receiving, by the relay terminal, the second indication information from the first access network device; and sending, by the relay terminal, the second indication information from the first access network device to the remote terminal.

In a possible design, the method may further include: the first indication information is included in an RLC control PDU, where the first indication information includes a first identifier of the first data and reception acknowledgement information of the first data, and the reception acknowledgement information of the first data indicates whether the relay terminal successfully receives each piece of data in the first data; and the second indication information is included in a PDCP control PDU, where the second indication information includes a second identifier of the first data, and the second indication information indicates whether the first access network device successfully receives each piece of data in the first data.

In a possible design, the method may further include: the first identifier includes a serial number of the first data; and the second identifier includes a count COUNT value or a sequence number SN of the first data.

In a possible design, the method may further include: receiving, by the relay terminal, configuration information of a third function from the first access network device, where the third function is used by the relay terminal to send the first indication information to the remote terminal.

In addition, for a technical effect of the communication method in the third aspect, refer to the technical effect of the communication method in the first aspect. Details are not described herein again.

According to a fourth aspect, this application provides a communication method. The method may be applied to a relay terminal, or may be applied to a chip or a processor in the relay terminal. For example, the method is described by using the relay terminal as an example. The communication method includes: sending, by a relay terminal, first indication information to a first access network device, where the first indication information indicates that the relay terminal has received first data, and the first data is data sent to a remote terminal; sending, by the relay terminal, second indication information to the first access network device, where the second indication information indicates whether the remote terminal receives the first data; and sending, by the relay terminal, second data to the remote terminal, where the second data includes data that is in the first data and that is not received by the remote terminal.

In a possible design, the method may further include: after the remote terminal switches from the first access network device to a second access network device, sending, by the relay terminal, the second data to the remote terminal.

In a possible design, the method may further include: the sending, by the relay terminal, second indication information to the first access network device specifically includes: receiving, by the relay terminal, the second indication information from the remote terminal; and sending, by the relay terminal, the second indication information from the remote terminal to the first access network device.

In a possible design, the method may further include: the first indication information is included in an RLC control PDU, where the first indication information includes a first identifier of the first data and reception acknowledgement information of the first data, and the reception acknowledgement information of the first data indicates whether the relay terminal successfully receives each piece of data in the first data; and the second indication information is included in a PDCP control PDU, where the second indication information includes a second identifier of the first data, and the second indication information indicates whether the first access network device successfully receives each piece of data in the first data.

In a possible design, the method may further include: the first identifier includes a serial number of the first data; and the second identifier includes a count COUNT value or a sequence number SN of the first data.

In a possible design, the method may further include: receiving, by the relay terminal, configuration information of a second function from the first access network device, where the second function is used by the relay terminal to send the first indication information to the first access network device.

In addition, for a technical effect of the communication method in the fourth aspect, refer to the technical effect of the communication method in the first aspect. Details are not described herein again.

According to a fifth aspect, this application provides a communication method. The method may be applied to a first access network device, or may be applied to a chip or a processor in the first access network device. For example, the method is described by using the first access network device as an example. The communication method includes: sending, by a first access network device, second indication information to a remote terminal by using a relay terminal, where the second indication information indicates whether the first access network device receives first data, and the first data is data sent to the first access network device; and receiving, by a second access network device, second data from the relay terminal or the remote terminal, where the second data includes data that is in the first data and that is not received by the first access network device.

In a possible design, the method may further include: after the remote terminal switches from the first access network device to the second access network device, receiving, by the second access network device, the second data from the relay terminal or the remote terminal.

In a possible design, the method may further include: the second indication information is included in a PDCP status report, where the second indication information includes a second identifier of the first data, and the second indication information indicates whether the first access network device successfully receives each piece of data in the first data.

In a possible design, the method may further include: the second identifier includes a count COUNT value or a sequence number SN of the first data.

In a possible design, the method may further include: sending, by the first access network device, configuration information of a first function to the remote terminal, where the first function is used by the remote terminal to determine third indication information based on the first indication information and/or the second indication information, and the third indication information indicates data that is in the first data and that is successfully received by the first access network device.

In addition, for a technical effect of the communication method in the fifth aspect, refer to the technical effect of the communication method in the first aspect. Details are not described herein again.

According to a sixth aspect, this application provides a communication method. The method may be applied to a remote terminal, or may be applied to a chip or a processor in the remote terminal. For example, the method is described by using the remote terminal as an example. The communication method includes: sending, by a remote terminal, second indication information to a first access network device by using a relay terminal, where the second indication information indicates whether the remote terminal receives first data, and the first data is data sent to the remote terminal; and receiving, by the remote terminal, second data sent by the relay terminal or a second access network device, where the second data includes data that is in the first data and that is not received by the remote terminal.

In a possible design, the method may further include: after the remote terminal switches from the first access network device to the second access network device, receiving, by the remote terminal, the second data sent by the relay terminal or the second access network device.

In a possible design, the method may further include: the second indication information is included in a PDCP control PDU, where the second indication information includes a second identifier of the first data, and the second indication information indicates whether the first access network device successfully receives each piece of data in the first data.

In a possible design, the method may further include: the second identifier includes a count COUNT value or a sequence number SN of the first data.

In addition, for a technical effect of the communication method in the sixth aspect, refer to the technical effect of the communication method in the first aspect. Details are not described herein again.

According to a seventh aspect, a communication apparatus is provided. The communication apparatus includes a receiving module, a processing module, and a sending module. The receiving module is configured to receive first indication information from a relay terminal, where the first indication information indicates that the relay terminal has received first data, and the first data is data sent to a first access network device. The receiving module is further configured to receive second indication information, where the second indication information indicates whether the first access network device receives the first data. The processing module is configured to determine second data based on the second indication information, where the second data includes data that is in the first data and that is not received by the first access network device. The sending module is configured to send the second data to the relay terminal or a second access network device.

In a possible design, the processing module is further configured to determine the second data based on the first indication information and the second indication information.

In a possible design, the second indication information is from the relay terminal or the first access network device.

In a possible design, the first indication information is included in a radio link control RLC control protocol data unit PDU, where the first indication information includes a first identifier of the first data and reception acknowledgement information of the first data, and the reception acknowledgement information of the first data indicates whether the relay terminal successfully receives each piece of data in the first data; and the second indication information is included in a packet data convergence protocol PDCP control PDU, where the second indication information includes a second identifier of the first data, and the second indication information indicates whether the first access network device successfully receives each piece of data in the first data.

In a possible design, the first identifier includes a serial number of the first data; and the second identifier includes a count COUNT value or a sequence number SN of the first data.

In a possible design, the receiving module is further configured to receive configuration information of a first function from the first access network device, where the first function is used by the remote terminal to determine third indication information based on the first indication information and/or the second indication information, and the third indication information indicates data that is in the first data and that is successfully received by the first access network device.

In a possible design, the processing module is further configured to determine the second data based on the third indication information.

In addition, for a technical effect of the communication apparatus in the seventh aspect, refer to the technical effect of the communication method in the first aspect. Details are not described herein again.

According to an eighth aspect, a communication apparatus is provided. The communication apparatus includes a receiving module, a processing module, and a sending module. The receiving module is configured to receive first indication information from a relay terminal, where the first indication information indicates that the relay terminal has received first data, and the first data is data sent to a remote terminal. The receiving module is further configured to receive second indication information, where the second indication information indicates whether the remote terminal receives the first data. The processing module is configured to determine second data based on the second indication information, where the second data includes data that is in the first data and that is not received by the remote terminal. The sending module is configured to send the second data to the relay terminal or the remote terminal.

In a possible design, the processing module is further configured to determine the second data based on the first indication information and the second indication information, where the second data includes data that is in the first data and that is not received by the remote terminal.

In a possible design, the second indication information is from the relay terminal or the remote terminal.

In a possible design, the first indication information is included in an RLC control PDU, where the first indication information includes a first identifier of the first data and reception acknowledgement information of the first data, and the reception acknowledgement information of the first data indicates whether the relay terminal successfully receives data corresponding to each count value or sequence number in the first data; and the second indication information is included in a PDCP control PDU, where the second indication information includes a second identifier of the first data.

In a possible design, the first identifier includes a serial number of the first data; and the second identifier includes a count COUNT value or a sequence number SN of the first data.

In a possible design, the sending module is further configured to send configuration information of a second function to the relay terminal, where the second function is used by the relay terminal to send the second indication information to a first access network device.

In a possible design, the processing module is further configured to determine third indication information based on the first indication information and/or the second indication information, where the third indication information indicates data that is in the first data and that is successfully received by the first access network device.

In a possible design, the processing module is further configured to determine the second data based on the third indication information.

In addition, for a technical effect of the communication apparatus in the eighth aspect, refer to the technical effect of the communication method in the second aspect. Details are not described herein again.

According to a ninth aspect, a communication apparatus is provided. The communication apparatus includes a sending module. The sending module is configured to send first indication information to a remote terminal, where the first indication information indicates that the relay terminal has received first data, and the first data is data sent to a first access network device. The sending module is further configured to send second indication information to the remote terminal, where the second indication information indicates whether the first access network device receives the first data. The sending module is further configured to send second data to a second access network device, where the second data includes data that is in the first data and that is not received by the first access network device.

In a possible design, the communication apparatus further includes a receiving module, where the receiving module is configured to receive the second indication information from the first access network device; and
the sending module is further configured to send the second indication information from the first access network device to the remote terminal.

In a possible design, the first indication information is included in an RLC control PDU, where the first indication information includes a first identifier of the first data and reception acknowledgement information of the first data, and the reception acknowledgement information of the first data indicates whether the relay terminal successfully receives each piece of data in the first data; and the second indication information is included in a PDCP control PDU, where the second indication information includes a second identifier of the first data, and the second indication information indicates whether the first access network device successfully receives each piece of data in the first data.

In a possible design, the first identifier includes a serial number of the first data; and the second identifier includes a count COUNT value or a sequence number SN of the first data.

In a possible design, the receiving module is further configured to receive configuration information of a third function from the first access network device, where the third function is used by the relay terminal to send the first indication information to the remote terminal.

In addition, for a technical effect of the communication apparatus in the ninth aspect, refer to the technical effect of the communication method in the first aspect. Details are not described herein again.

According to a tenth aspect, a communication apparatus is provided. The communication apparatus includes a sending module. The sending module is configured to send first indication information to a first access network device, where the first indication information indicates that a relay terminal has received first data, and the first data is data sent to a remote terminal. The sending module is further configured to send second indication information to the first access network device, where the second indication information indicates whether the remote terminal receives the first data. The sending module is further configured to send second data to the remote terminal, where the second data includes data that is in the first data and that is not received by the remote terminal.

In a possible design, the communication apparatus further includes a receiving module, where the receiving module is configured to receive the second indication information from the remote terminal; and
the sending module is further configured to send the second indication information from the remote terminal to the first access network device.

In a possible design, the first indication information is included in an RLC control PDU, where the first indication information includes a first identifier of the first data and reception acknowledgement information of the first data, and the reception acknowledgement information of the first data indicates whether the relay terminal successfully receives each piece of data in the first data; and the second indication information is included in a PDCP control PDU, where the second indication information includes a second identifier of the first data, and the second indication information indicates whether the first access network device successfully receives each piece of data in the first data.

In a possible design, the first identifier includes a serial number of the first data; and the second identifier includes a count COUNT value or a sequence number SN of the first data.

In a possible design, the receiving module is further configured to receive configuration information of a second function from the first access network device, where the second function is used by the relay terminal to send the first indication information to the first access network device.

In addition, for a technical effect of the communication apparatus in the tenth aspect, refer to the technical effect of the communication method in the second aspect. Details are not described herein again.

According to an eleventh aspect, a communication apparatus is provided. The communication apparatus includes a sending module and a receiving module. The sending module is configured to send second indication information to a remote terminal, where the second indication information indicates whether a first access network device receives first data, and the first data is data sent to the first access network device. The receiving module is configured to receive second data from a relay terminal or the remote terminal, where the second data includes data that is in the first data and that is not received by the first access network device.

In a possible design, the second indication information is included in a PDCP control PDU, where the second indication information includes a second identifier of the first data, and the second indication information indicates whether the first access network device successfully receives each piece of data in the first data.

In a possible design, the second identifier includes a COUNT value or an SN of the first data.

In a possible design, the sending module is further configured to send configuration information of a first function to the remote terminal, where the first function is used by the remote terminal to determine third indication information based on the first indication information and/or the second indication information, and the third indication information indicates data that is in the first data and that is successfully received by the first access network device.

In addition, for a technical effect of the communication apparatus in the eleventh aspect, refer to the technical effect of the communication method in the first aspect. Details are not described herein again.

According to a twelfth aspect, a communication apparatus is provided. The communication apparatus includes a sending module and a receiving module. The sending module is configured to send second indication information to a first access network device, where the second indication information indicates whether a remote terminal receives first data, and the first data is data sent to the remote terminal. The receiving module is configured to receive second data sent by a relay terminal or a second access network device, where the second data includes data that is in the first data and that is not received by the remote terminal.

In a possible design, the second indication information is included in a PDCP control PDU, where the second indication information includes a second identifier of the first data, and the second indication information indicates whether the first access network device successfully receives each piece of data in the first data.

In a possible design, the second identifier includes a COUNT value or an SN of the first data.

In addition, for a technical effect of the communication apparatus in the twelfth aspect, refer to the technical effect of the communication method in the second aspect. Details are not described herein again.

According to a thirteenth aspect, a communication apparatus is provided. The communication apparatus includes a processor. The processor is coupled to a memory. The memory is configured to store a computer program. The processor is configured to execute the computer program stored in the memory, so that the communication apparatus is enabled to perform the communication method according to any possible implementation of the first aspect to the sixth aspect.

In a possible design, the communication apparatus according to the thirteenth aspect may further include a transceiver. The transceiver may be a transceiver circuit or an input/output port. The transceiver may be used by the communication apparatus to communicate with another communication apparatus.

In this application, the communication apparatus according to the thirteenth aspect may be a terminal device or a network device, or a chip (system) or another component or assembly disposed inside the terminal device or the network device.

In addition, for a technical effect of the communication apparatus in the thirteenth aspect, refer to the technical effect of the communication method according to any possible implementation of the first aspect to the sixth aspect. Details are not described herein again.

According to a fourteenth aspect, a communication system is provided. The communication system includes one or more terminal devices and one or more network devices.

According to a fifteenth aspect, a computer-readable storage medium is provided, including a computer program or instructions. When the computer program or the instructions are run on a computer, the computer is enabled to perform the communication method according to any possible implementation of the first aspect to the sixth aspect.

According to a sixteenth aspect, a computer program product is provided. The computer program product includes a computer program or instructions. When the computer program or the instructions are run on a computer, the computer is enabled to perform the communication method according to any possible implementation of the first aspect to the sixth aspect.

According to a seventeenth aspect, a communication system is provided. The communication system is configured to perform the communication method according to any possible implementation of the first aspect to the sixth aspect.

### BRIEF DESCRIPTION OF DRAWINGS

FIG. 1 is a schematic diagram of a V2X communication scenario according to an embodiment of this application;
FIG. 2 is a schematic diagram of a structure of a communication device according to an embodiment of this application;
FIG. 3a is a schematic diagram of a structure of a communication scenario according to an embodiment of this application;
FIG. 3b is a schematic diagram of a structure of another communication scenario according to an embodiment of this application;
FIG. 3c is a schematic flowchart of a communication method according to an embodiment of this application;
FIG. 3d is a schematic flowchart of another communication method according to an embodiment of this application;
FIG. 4 is a schematic flowchart of another communication method according to an embodiment of this application;
FIG. 5 is a schematic flowchart of another communication method according to an embodiment of this application;
FIG. 6a is a schematic flowchart of another communication method according to an embodiment of this application;
FIG. 6b is a schematic diagram of a format of second indication information according to an embodiment of this application;
FIG. 6c is a schematic flowchart of another communication method according to an embodiment of this application;
FIG. 7a is a schematic flowchart of another communication method according to an embodiment of this application;
FIG. 7b is a schematic flowchart of another communication method according to an embodiment of this application;
FIG. 8 is a schematic flowchart of another communication method according to an embodiment of this application;
FIG. 9 is a schematic flowchart of another communication method according to an embodiment of this application;
FIG. 10 is a schematic flowchart of another communication method according to an embodiment of this application;
FIG. 11 is a schematic flowchart of another communication method according to an embodiment of this application;
FIG. 12 is a schematic flowchart of another communication method according to an embodiment of this application;
FIG. 13 is a schematic flowchart of another communication method according to an embodiment of this application;
FIG. 14 is a schematic diagram of a structure of a communication apparatus according to an embodiment of this application;
FIG. 15 is a schematic diagram of a structure of another communication apparatus according to an embodiment of this application;
FIG. 16 is a schematic diagram of a structure of another communication apparatus according to an embodiment of this application; and
FIG. 17 is a schematic diagram of a structure of another communication apparatus according to an embodiment of this application.

### DESCRIPTION OF EMBODIMENTS

The following describes the technical solutions in embodiments of this application with reference to the accompanying drawings in embodiments of this application. In this application, "at least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including one item (piece) or any combination of a plurality of items (pieces). For example, at least one (piece) of a, b, or c may represent: a, b, c, a and b, a and c, b and c, or a, b, and c, where a, b, and c may be singular or plural. In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity and an execution sequence. For example, "first" in a first terminal and "second" in a second terminal in embodiments of this application are merely used to distinguish between different terminal devices.

It should be noted that, in this application, terms such as "example" or "for example" are used for representing giving an example, an illustration, or a description. Any embodiment or design scheme described as an "example" or "for example" in this application should not be explained as being more preferred or having more advantages than another embodiment or design scheme. Exactly, use of the term "example", "for example", or the like is intended to present a relative concept in a specific manner.

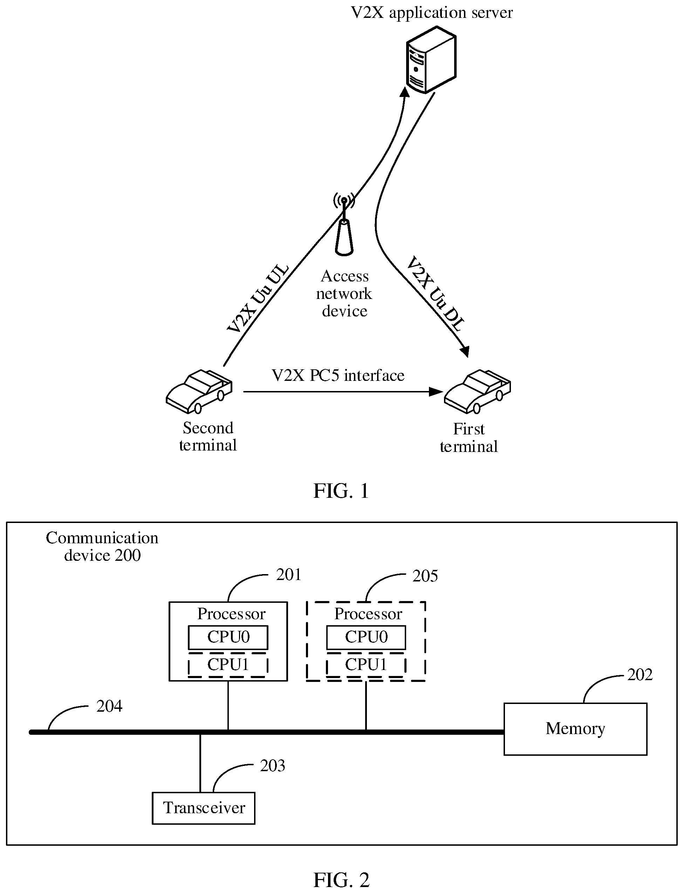

Embodiments of this application provide a communication method. The communication method is applied to a V2X communication scenario shown in FIG. 1. As shown in FIG. 1, a first terminal and a second terminal communicate with each other by using a sidelink. The sidelink is a secondary link in a V2X network. In addition to the secondary link, the V2X network includes an uplink (uplink, UL) and a downlink (downlink, DL). For example, V2X communication includes vehicle-to-vehicle (vehicle-to-vehicle, V2V) communication, vehicle-to-infrastructure (vehicle-to-infrastructure, V2I) communication, vehicle-to-people (vehicle-to-people, V2P) communication, and vehicle-to-network (vehicle-to-network, V2N) communication. V2V communication between the first terminal and the second terminal that are both vehicles is merely used as an example in FIG. 1. A specific V2X communication scenario is not limited in embodiments of this application. For example, the first terminal and the second terminal may be communication between vehicle-mounted devices, communication between a road side unit (road side unit, RSU) and a vehicle-mounted device and/or a network device (for example, a base station device), or communication between a network device (for example, a base station device) and a vehicle-mounted device and/or an RSU. The network device may be an LTE base station device, an NR base station device, or a base station in a subsequent evolved system. It may be understood that specific forms of the first terminal and the second terminal are not limited in embodiments of this application, and the descriptions herein are merely examples. For example, an access network device in FIG. 1 may be a base station, or a device that is in a network and that provides wireless access.

The V2X communication architecture shown in FIG. 1 includes two communication interfaces: a PC5 interface and a Uu interface. The V2X PC5 interface is a direct communication interface between V2X terminals. Communication through the V2X Uu interface is a communication mode in which a transmitter V2X terminal (for example, the second terminal) sends V2X data to an access network device (for example, a base station) through the Uu interface, the access network device sends the V2X data to a V2X application server for processing, then the V2X application server delivers the V2X data to an access network device, and the access network device sends the V2X data to a receiver V2X terminal (for example, the first terminal). In the communication mode through the V2X Uu interface, the access network device that forwards uplink data from the terminal to the server and the access network device that forwards downlink data delivered by the server to the receiver terminal may be a same access network device, or may be different access network devices. This may be specifically determined by the V2X application server.

FIG. 2 shows a communication device according to an embodiment of this application. The communication device may be a first terminal or a second terminal in this application. The communication device may be a vehicle, may be a vehicle-mounted communication apparatus or a vehicle-mounted terminal that is mounted on a vehicle to assist the vehicle in driving, or may be a chip in a vehicle-mounted communication apparatus or a vehicle-mounted terminal. The vehicle-mounted terminal may be a device configured to implement a wireless communication function, for example, a terminal or a chip that can be used in the terminal. The terminal may be user equipment (user equipment, UE), an access terminal, a terminal unit, a terminal station, a mobile station, a mobile console, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device having a wireless communication function, another processing device, vehicle-mounted device, or wearable device connected to a wireless modem, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The vehicle-mounted terminal may be movable or fixed.

As shown in FIG. 2, the communication device 200 includes at least one processor 201, a memory 202, a transceiver 203, and a communication bus 204.

The following specifically describes each component of the communication device with reference to FIG. 2.

The processor 201 is a control center of the communication device, and may be one processor or may be a collective name of a plurality of processing elements. For example, the processor 201 is a central processing unit (central processing unit, CPU), or an application-specific integrated circuit (application-specific integrated circuit, ASIC), or is configured as one or more integrated circuits for implementing embodiments of the present invention, for example, one or more microprocessors (digital signal processors, DSPs) or one or more field programmable gate arrays (field programmable gate arrays, FPGAs).

The processor 201 may perform various functions of the communication device by running or executing a software program stored in the memory 202 and invoking data stored in the memory 202.

During a specific implementation, in an embodiment, the processor 201 may include one or more CPUs, for example, a CPU0 and a CPU1 shown in FIG. 2.

During a specific implementation, in an embodiment, the communication device may include a plurality of processors, for example, the processor 201 and a processor 205 shown in FIG. 2. Each of the processors may be a single-core processor (single-CPU) or may be a multi-core processor (multi-CPU). The processor herein may be one or more communication devices, circuits, and/or processing cores configured to process data (for example, computer program instructions).

The memory 202 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage device, or any other medium that can be used to carry or store expected program code in a form of an instruction or a data structure and that can be accessed by a computer. However, this is not limited thereto. The memory 202 may exist independently, and is connected to the processor 201 by using the communication bus 204. Alternatively, the memory 202 may be integrated with the processor 201.

The memory 202 is configured to store a software program for executing the solutions of the present invention, and the processor 201 controls the execution.

The transceiver 203 is configured to communicate with another communication device. Certainly, the transceiver 203 may be further configured to communicate with a communication network, for example, the Ethernet, a radio access network (radio access network, RAN), or a wireless local area network (wireless local area network, WLAN). The transceiver 203 may include a receiving unit to implement a receiving function, and a sending unit to implement a sending function.

The communication bus 204 may be an industry standard architecture (industry standard architecture, ISA) bus, a peripheral component interconnect (peripheral component interconnect, PCI) bus, or an extended industry standard architecture (extended industry standard architecture, EISA) bus. The bus may be classified into an address bus, a data bus, a control bus, and the like. For ease of representation, only one thick line is used to represent the bus in FIG. 2, but this does not mean that there is only one bus or only one type of bus.

The structure of the communication device shown in FIG. 2 does not constitute a limitation on the communication device. The communication device may include more or fewer components than those shown in the figure, or combine some components, or use a different component deployment. In a scenario in which a terminal communicates with a network, or a terminal communicates with a terminal, for service data having a very high reliability requirement, an acknowledged mode (acknowledge mode, AM) data radio bearer (data radio bearer, DRB) is usually configured on an air interface side or a sidelink interface side for data transmission. An AM DRB is a DRB configured with an AM radio link control RLC layer entity. Reliability of packet transmission may be ensured by using an RLC layer entity automatic repeat request (automatic repeat request, ARQ) mechanism, and lossless transmission of data also needs to be ensured when the terminal performs switching.

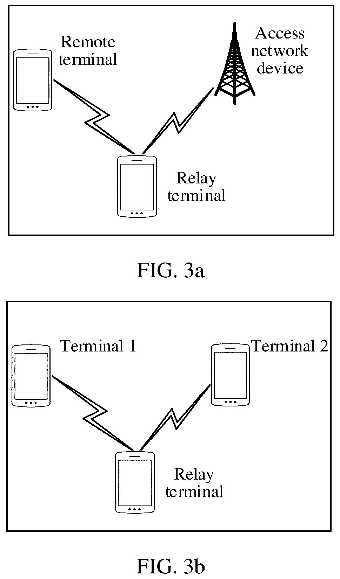

In a scenario in which a terminal communicates with a network, as shown in FIG. 3a, after relaying is performed by using a relay node, a remote terminal located at a cell coverage edge or outside a cell can perform data transmission with an access network device, thereby enhancing a network coverage capability. When the terminal communicates with the network, there is one remote terminal and one or more relay terminals (that is, relay nodes), and data and signaling may be transmitted between the remote terminal and the access network device by using the relay node. At present, there are two implementations for communication between the terminal and the network: a layer 3 (L3, Layer 3)-based relay manner and a layer 2 (L2, Layer 2)-based relay manner. In the L3-based relay manner, user data is relayed and forwarded at an IP layer; however, in the L2-based relay manner, the user data is relayed and forwarded below a PDCP layer entity.

In a scenario in which a terminal communicates with another terminal, as shown in FIG. 3b, after forwarding is performed by using a relay node, problems that a communication distance is not very long due to an insufficient hardware capability of a terminal on a transmit side, and a scenario in which the terminal communicates with the terminal by using a sidelink is limited can be resolved. At present, there are two implementations for communication between the terminal and the terminal: an L3-based relay manner and an L2-based relay manner. In the conventional technology, for an AM DRB, in a process in which a terminal switches from a first access network device to a second access network device, the first access network device transmits an uplink/downlink PDCP sequence number SN and a hyper frame number (hyper frame number, HFN) status to a target station by using SN status transfer information, and transmits an uplink/downlink PDCP service data unit (Service Data Unit, SDU) to the target station by using a data forwarding process.

Specifically, the conventional technology is described in two cases: an uplink case and a downlink case.

Case one: Downlink transmission includes the following steps:
S3011. The first access network device indicates, to the second access network device in the SN status transfer information, a count COUNT value that needs to be allocated to a next downlink PDCP SDU to which no count COUNT value is allocated in one AM DRB.

Both the COUNT value and the SN indicate a sequence number of a PDCP SDU, the COUNT value is a length of 32 bits, the SN is low 12/18 bits of the COUNT value, and the HFN is high 20/14 bits thereof.

In this application, the COUNT value and the SN may be used as an identifier of a packet in the PDCP layer entity.

S3012. In a data forwarding process, the first access network device first sequentially forwards, to the second access network device, all PDCP SDUs that do not receive acknowledgement feedback from the terminal and corresponding SNs, and then forwards, to the second access network device, a PDCP SDU received from a user plane function (user plane function, UPF).

The acknowledgement feedback of the terminal is a feedback that is indicated by an RLC layer entity of the terminal and that is for confirming that data is successfully received, and is included in an RLC status report sent by the terminal.

S3013. The second access network device first sends, to the terminal, a PDCP SDU that carries an SN and that is forwarded by the first access network device, and then sends, to the terminal, a PDCP SDU that does not carry an SN and that is forwarded by the first access network device. If the second access network device receives a PDCP status report sent by the terminal, the second access network device does not need to send, to the terminal, a PDCP SDU that is acknowledged as being received in the PDCP status report.

S3014. After receiving the PDCP SDUs from the second access network device, the terminal reorders the PDCP SDUs and submits the PDCP SDUs to an upper layer.

Case two: Uplink transmission includes the following steps:
S3021. The first access network device indicates, to the second access network device in the SN status transfer information, a COUNT value (FMC, first missing COUNT) corresponding to a first PDCP SDU that is not received and a bit sequence that indicates a PDCP SDU receiving status of the first access network device, where an N^{th} bit in the bit sequence indicates a receiving status of an N^{th} PDCP SDU after the first PDCP SDU that is not received, a value 1 indicates that the N^{th} PDCP SDU is successfully received, and a value 0 indicates that the N^{th} PDCP SDU is not received.

The second access network device may generate a PDCP status report by using this part of information in the SN status transfer information, and send the PDCP status report to the terminal.

S3022. The first access network device forwards, to the second access network device in a data forwarding process, a PDCP SDU that is received out of order and a corresponding SN.

S3023. The terminal retransmits or transmits a PDCP SDU to the second access network device in ascending order of COUNT values starting from the first PDCP SDU that does not receive an acknowledge feedback from the first access network device. If the terminal receives a PDCP status report sent by the second access network device, the terminal does not need to send, to the second access network device, a PDCP SDU that is indicated in the PDCP status report and that has been successfully received. The acknowledgement feedback of the first access network device is a feedback that is indicated by an RLC layer entity of the first access network device and that is for confirming that data is successfully received.

In the conventional technology, the AM DRB uses an ARQ mechanism to ensure data transmission reliability. After receiving a packet (PDCP PDU) from the PDCP layer entity and transmitting the packet out, an AM RLC layer entity stores the packet in a buffer of the RLC layer entity. After an RLC status report of a peer AM RLC layer entity is received, if the RLC status report indicates that the packet is not received, the AM RLC layer entity retransmits the packet; or if the RLC status report confirms that the packet has been received, the AM RLC layer entity does not need to retransmit the packet, and the RLC layer entity sends an indication to the PDCP layer entity, to indicate that the packet has been successfully transmitted.

Specifically, in a scenario in which the terminal directly communicates with the access network device, if the RLC status report received by the terminal indicates that a packet is successfully transmitted on the RLC layer entity, the packet is definitely successfully transmitted to the access network device. However, in a relay scenario such as a sidelink relay scenario in which a packet needs to be relayed, a packet sent by a PDCP layer entity on a transmit side needs to be transmitted through two hops before reaching a PDCP layer entity on a receive side. In this case, an RLC status report received by the transmit side indicates that the packet is successfully transmitted on the RLC layer entity, but does not indicate that the packet has been successfully transmitted to the receive side. Therefore, when the terminal performs path switching/path switch, a packet that is not successfully transmitted to the receive side may be lost.

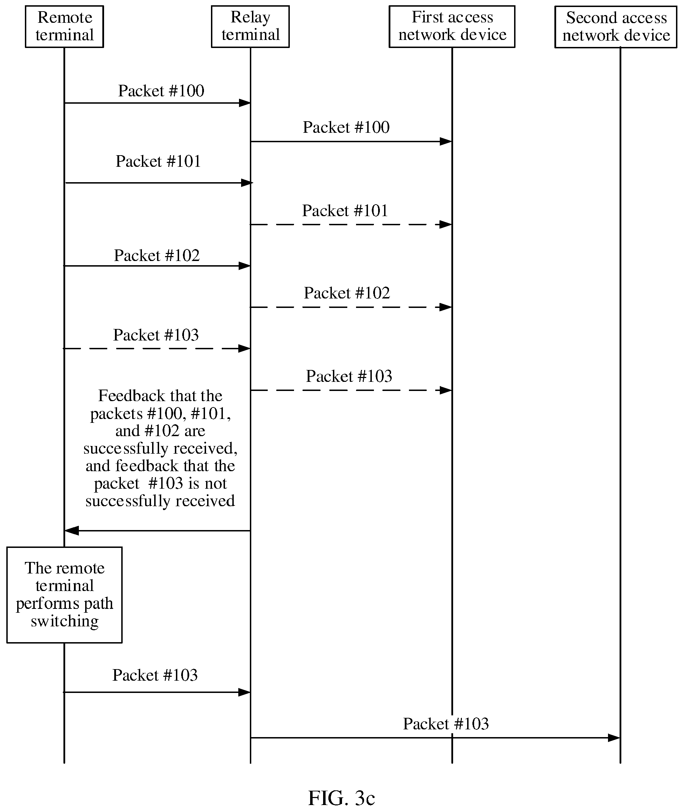

As shown in FIG. 3c, during uplink data transmission, a remote terminal sends packets #100 to #103 on an RLC layer, and receives an RLC status report fed back by a relay terminal, which indicates that the packets #100 to #102 are successfully received and the packet #103 is not received. In this case, the relay terminal forwards packets to a first access network device, and only a packet corresponding to #100 is successfully transmitted to the first access network device. In this case, the remote terminal performs switching, and a PDCP layer entity performs reestablishment and retransmits or transmits PDCP SDUs in ascending order of COUNT values starting from a PDCP SDU corresponding to #103 (that is, the first PDCP SDU that does not receive an acknowledgement feedback from the first access network device). If a transmission channel of the relay terminal and the access network device also deteriorates in this case, PDCP SDUs corresponding to #101 and #102 may be lost, and the remote terminal does not retransmit the PDCP SDUs corresponding to #101 and #102.

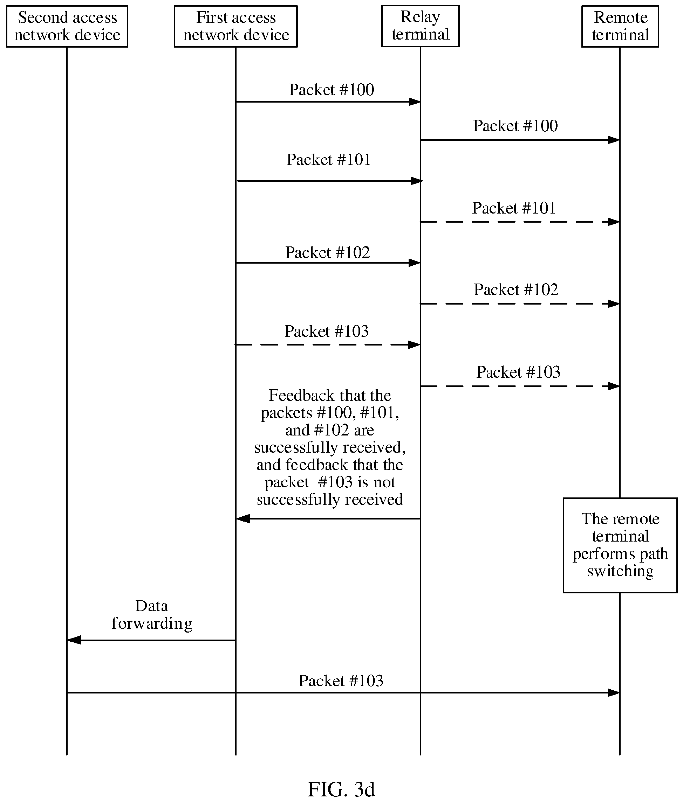

As shown in FIG. 3d, during downlink data transmission, when the remote terminal performs switching, the first access network device starts to forward the PDCP SDUs to the second access network device from the PDCP SDU corresponding to #103. However, if a link between the remote terminal and the relay terminal is disconnected in this case, the PDCP SDUs corresponding to #101 and #102 may be lost.

To resolve a problem that a packet is lost when a terminal performs path switching/path switch in a relay scenario such as a sidelink relay scenario, an embodiment of this application provides a communication method, so as to ensure that a packet is successfully received by a receive end when a terminal performs path switching/path switch, thereby improving data transmission efficiency.

With reference to FIG. 1 to FIG. 3d, FIG. 4 shows a communication method according to an embodiment of this application. The communication method includes steps S401 to S408, and may be applied to uplink data transmission.

S401. A remote terminal sends first data to a first access network device by using a relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number. For example, the first data includes four packets, and serial numbers corresponding to the packets are #100, #101, #102, and #103.

S402. The relay terminal sends first indication information to the remote terminal.

The first indication information indicates a receiving status of a packet in the first data by the relay terminal. For example, the first indication information indicates whether each packet in the first data has been successfully received.

Optionally, the first indication information includes a first identifier of the first data.

Optionally, the first indication information is included in an RLC control PDU. For example, the RLC control PDU may be an RLC status report, and subsequent steps S403 to S408 are described by using an example in which the first indication information is included in the RLC status report.

S403. The first access network device sends an RLC status report to the relay terminal.

S404. The relay terminal sends second indication information to the remote terminal.

The second indication information may include serial numbers of some or all packets in the first data. The second indication information may be referred to as a relay ACK indication message, and indicates whether the first access network device successfully receives each packet in the first data.

S405. An RLC layer entity of the remote terminal sends third indication information to a PDCP layer entity.

The third indication information is used by the RLC layer entity of the remote terminal to indicate, to the PDCP layer entity, an indication that a packet that is in the first data and that has been successfully transmitted to the first access network device is successfully transmitted.

Optionally, the remote terminal determines the third indication information based on the first indication information and/or the second indication information.

S406. The remote terminal determines second data.

Optionally, the remote terminal determines the second data based on the third indication information.

The second data includes a packet that is in the first data and that is not successfully received by the first access network device.

Optionally, the second data includes a first packet that is in the first data and that is not successfully received by the first access network device, and subsequent packets with consecutive serial numbers.

S407. The remote terminal performs path switching and switches from the first access network device to a second access network device.

S408. The remote terminal sends the second data to the second access network device.

Optionally, the remote terminal sends the second data to the second access network device by using the relay terminal.

It may be understood that, if the remote terminal is directly connected to the second access network device and directly performs data transmission with the second access network device after the remote terminal performs path switching, the remote terminal directly sends the second data to the second access network device, and the second data does not need to be sent by using the relay terminal. For example, after accessing the second access network device in a random access process, the remote terminal sends the second data to the second access network device.

Optionally, in step S407, the first access network device may indicate the remote terminal to re-establish the PDCP layer entity. In this case, in step S408, the remote terminal sends the second data to the first access network device.

It should be noted that, for data that is successfully sent to the first access network device before the remote terminal performs path switching, after the remote terminal performs path switching, the first access network device may forward, to the second access network device, data that is not delivered to a core network.

Based on the foregoing technical solution, the remote terminal sends the indication information to the PDCP layer entity only after confirming that the data has been successfully transmitted to the access network device, to indicate that data transmission succeeds. When the remote terminal performs path switching and switches from the first access network device to the second access network device, data that is not successfully transmitted to the access network device is resent by the remote terminal to the access network device, so that the data that is not successfully transmitted to the access network device is not missed, thereby avoiding a data loss. In this way, lossless transmission of downlink data during terminal switching in a relay scenario is implemented, and service continuity is ensured.

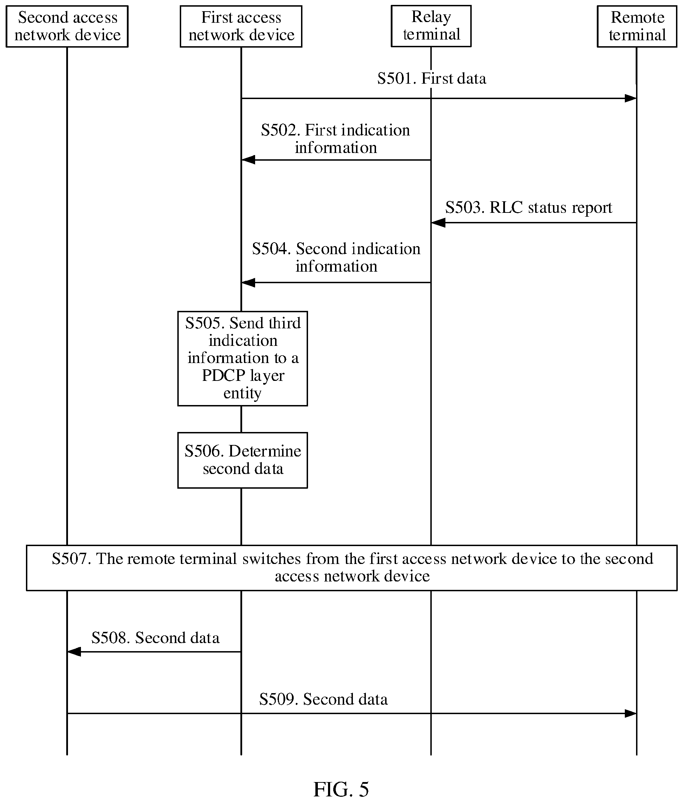

With reference to FIG. 1 to FIG. 3d, FIG. 5 shows a communication method according to an embodiment of this application. The communication method includes steps S501 to S509, and may be applied to downlink data transmission.

S501. A first access network device sends first data to a remote terminal by using a relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number. For example, the first data includes four packets, and serial numbers corresponding to the packets are #100, #101, #102, and #103.

S502. The relay terminal sends first indication information to the first access network device.

The first indication information indicates a receiving status of a packet in the first data by the relay terminal. For example, the first indication information indicates whether each packet in the first data has been successfully received.

Optionally, the first indication information includes a first identifier of the first data.

Optionally, the first indication information is included in an RLC control PDU. For example, the RLC control PDU may be an RLC status report, and subsequent steps S503 to S509 are described by using an example in which the first indication information is included in the RLC status report.

S503: The remote terminal sends an RLC status report to the relay terminal.

S504. The relay terminal sends second indication information to the first access network device.

The second indication information includes serial numbers of some or all packets in the first data. The second indication information may be referred to as a relay ACK indication message, and indicates whether the remote terminal successfully receives each packet in the first data.

S505. An RLC layer entity of the first access network device sends third indication information to a PDCP layer entity.

The third indication information is used by an RLC layer entity of the remote terminal to indicate, to the PDCP layer entity, an indication that a packet that is in the first data and that has been successfully transmitted to the remote terminal is successfully transmitted.

Optionally, the first access network device determines the third indication information based on the first indication information and/or the second indication information.

S506. The first access network device determines second data.

Optionally, the first access network device determines the second data based on the third indication information.

The second data includes a packet that is in the first data and that is not successfully received by the remote terminal.

S507. The remote terminal switches from the first access network device to a second access network device.

S508. The first access network device forwards the second data to the second access network device.

S509. The second access network device sends the second data to the remote terminal.

Optionally, the second access network device sends the second data to the remote terminal by using the relay terminal.

It may be understood that, if the remote terminal is directly connected to the second access network device after the remote terminal performs path switching, the second access network device may directly perform data transmission with the remote terminal to send the second data, and the second data does not need to be sent by using the relay terminal. For example, after the remote terminal accesses the second access network device in a random access process, the second access network device sends the second data to the remote terminal.

Optionally, in step S507, the first access network device may indicate the remote terminal to re-establish the PDCP layer entity. In this case, in steps S508 and S509, the remote terminal sends the second data to the first access network device.

Based on the foregoing technical solution, the first access network device sends the indication information to the PDCP layer entity only after confirming that the data has been successfully transmitted to the remote terminal, to indicate that data transmission succeeds. When the remote terminal performs path switching and switches from the first access network device to the second access network device, data that is not successfully transmitted to the remote terminal is resent by the second access network device to the remote terminal, so that the data that is not successfully transmitted to the remote terminal is not missed, thereby avoiding a data loss. In this way, lossless transmission of downlink data during terminal switching in a relay scenario is implemented, and service continuity is ensured.

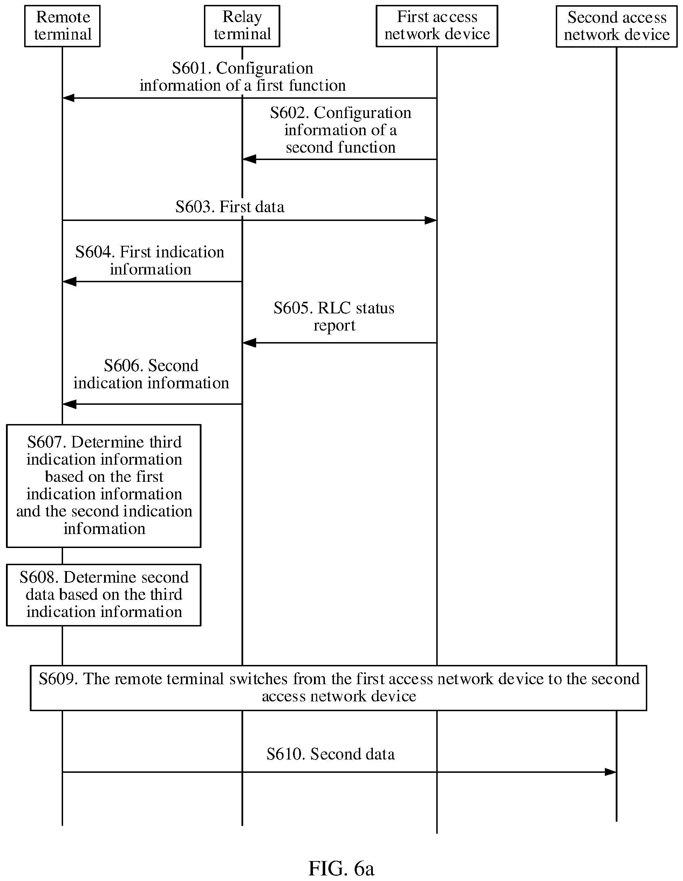

For example, an embodiment of this application further provides a communication method. As shown in FIG. 6a, the method includes steps S601 to S610, and may be applied to uplink data transmission in a relay scenario such as a sidelink relay scenario.

S601. A first access network device sends configuration information of a first function to a remote terminal by using a relay terminal.

The first function is used by an RLC layer of the remote terminal to send, to a PDCP layer based on received second indication information, indication information indicating that data transmission succeeds. The configuration information of the first function may be carried in an information element of an RRC reconfiguration message, for example, carried in an RLC configuration information element.

It should be noted that, after the remote terminal is configured with the first function, after an RLC layer entity of the remote terminal receives an RLC control PDU fed back by the relay terminal, the RLC layer entity of the remote terminal does not send, to the PDCP layer, indication information indicating that data transmission succeeds for an RLC SDU indicating that the RLC SDU has been successfully transmitted. Only after the remote terminal further receives second indication information sent by the relay terminal, the RLC layer entity of the remote terminal sends, to the PDCP layer based on information that is about RLC SDUs that have been successfully delivered to the first access network device and that is indicated in the message, indication information indicating that transmission of data corresponding to the RLC SDUs succeeds.

S602. The first access network device sends configuration information of a second function to the relay terminal.

The second function is used by the relay terminal to send the second indication information to the remote terminal. The second indication information is used by the remote terminal to obtain a result of receiving first data by the first access network device.

It should be noted that after the relay terminal is configured with the second function, after receiving an RLC status report from the first access network device, the relay terminal triggers sending of the second indication information to the remote terminal, and the relay terminal indicates, in the second indication information based on an RLC control PDU fed back by the first access network device, information about an RLC SDU that has been successfully transmitted to the first access network device. The second indication information indicates whether the first access network device successfully receives some or all packets in the first data.

Optionally, after receiving the RLC control PDU from the first access network device, the relay terminal triggers sending of the second indication information to the remote terminal.

Optionally, the second function configured by the first access network device for the relay terminal can configure the relay terminal to send the second indication information to only one or some remote terminals, to indicate the first access network device to receive an acknowledgement result of the first data sent by the corresponding remote terminal. For example, the configuration information of the second function may carry identification information of the remote terminal. For example, if the relay terminal is connected to a remote terminal A and a remote terminal B, and the first access network device may configure the relay terminal to send the second indication information to the remote terminal A, the relay terminal receives the RLC control PDU fed back by the first access network device, where the RLC control PDU indicates that some packets sent by the remote terminal A and the remote terminal B have been successfully delivered to the first access network device, and the relay terminal sends the second indication information only to the remote terminal A.

Optionally, in steps S601 and S602, the RLC control PDU may be an RLC status report.

S603. The remote terminal sends first data to the first access network device by using the relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number, and the serial number is a serial number corresponding to the packet on the RLC layer. For example, the first data includes four packets, and serial numbers corresponding to the packets are #100, #101, #102, and #103.

S604. After receiving the first data, the relay terminal sends first indication information to the remote terminal.

The first indication information indicates a receiving status of a packet in the first data by the relay terminal. For example, the first indication information indicates whether each packet in the first data has been successfully received.

Optionally, the first indication information includes a first identifier of the first data.

Optionally, the first indication information is included in an RLC control PDU. For example, the RLC control PDU may be an RLC status report, and subsequent steps S605 to S610 are described by using an example in which the first indication information is included in the RLC status report.

S605. The first access network device sends an RLC status report to the relay terminal.

S606. After receiving the RLC status report from the first access network device, the relay terminal sends second indication information to the remote terminal.

The second indication information indicates whether the first access network device successfully receives each packet in the first data.

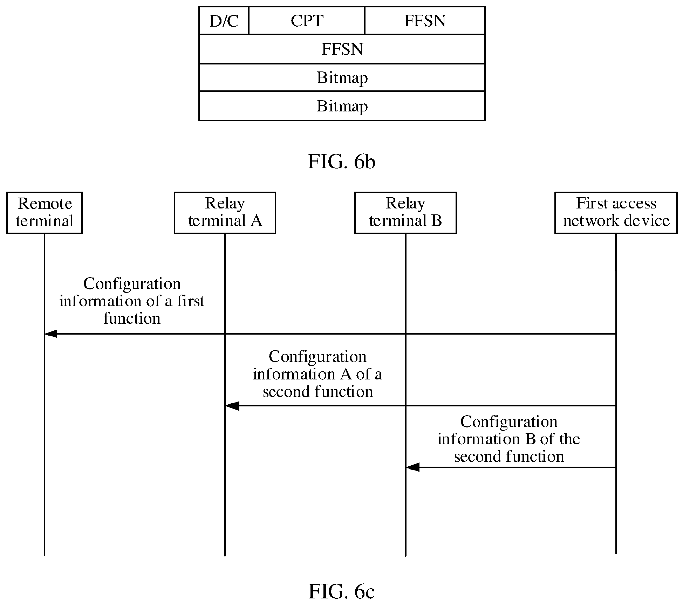

FIG. 6b is used as an example. The second indication information may be an RLC control PDU, and the second indication information is identified by using a control protocol data unit type (control protocol data unit type, CPT) field. For example, the second indication information may be referred to as a relay acknowledgement indication (relay ACK indication) message. For example, the message includes an indication field (for example, FFSN, first failed SN), to identify an SN of a first RLC SDU that has not been delivered to the first access network device. An RLC SDU whose SN is less than the FFSN may be considered as successfully delivered to the first access network device. Optionally, the message further includes a bitmap for identifying a delivery status of an RLC SDU after the FFSN, where an n^{th} bit after the FFSN identifies a delivery status of an RLC SDU corresponding to an SN=FFSN+n. If a value of the bit is 0, it indicates that the RLC SDU is still not delivered to the first access network device; otherwise, it indicates that the RLC SDU is delivered to the first access network device.

It may be understood that when the second function is configured, the relay terminal may generate the second indication information and send the second indication information to the remote terminal.

S607. The remote terminal determines third indication information based on the first indication information and the second indication information.

The third indication information is used by the RLC layer entity of the remote terminal to indicate, to the PDCP layer entity, an indication that a packet that is in the first data and that has been successfully transmitted to the first access network device is successfully transmitted.

Optionally, when configured with the first function, the remote terminal may determine the third indication information based on the first indication information and the second indication information or based on the second indication information, and the RLC layer entity indicates the third indication information to the PDCP layer entity.

Optionally, the remote terminal determines the third indication information based on the serial number corresponding to the packet successfully received by the relay terminal in the first indication information and the serial number corresponding to the packet successfully received by the first access network device in the second indication information.

For example, the serial number corresponding to the packet successfully received by the relay terminal in the first indication information is #100, #101, and #103, and the serial number corresponding to the packet successfully received by the first access network device in the second indication information is #100. In this case, the remote terminal determines that the packet whose serial number is #100 is successfully received by the first access network device, and the RLC layer entity indicates, to the PDCP layer entity by using the third indication information, that a PDCP SDU corresponding to the packet #100 has been successfully transmitted.

S608. The remote terminal determines second data based on the third indication information.

The second data includes a packet that is in the first data and that is not successfully received by the first access network device.

Optionally, the second data includes a first packet that is in the first data and that is not successfully received by the first access network device, and subsequent packets with consecutive serial numbers.

Optionally, the remote terminal determines the second data based on the serial number corresponding to the data successfully received by the first access network device in the third indication information and the serial number corresponding to each piece of data included in the first data.

It may be understood that if serial numbers corresponding to some data in the first data are not included in the serial number corresponding to the data successfully received by the first access network device in the third indication information, it indicates that the data corresponding to the serial numbers is not successfully transmitted to the first access network device. The data corresponding to the serial numbers is the second data.

For example, the serial number corresponding to the packet successfully received by the first access network device in the third indication information is #100, and the serial numbers corresponding to the packets included in the first data are #100, #101, #102, and #103. In this case, the remote terminal determines the packets whose serial numbers are #101, #102, and #103 in the first data as the second data.

S609. The remote terminal switches from the first access network device to a second access network device.

Optionally, after the remote terminal switches from the first access network device to the second access network device, the remote terminal may be connected to the second access network device by using the relay terminal to transmit data, or may be directly connected to the second access network device to transmit data.

It may be understood that, if the remote terminal is directly connected to the second access network device and directly performs data transmission with the second access network device after the remote terminal performs path switching, the remote terminal directly sends the second data to the second access network device, and the second data does not need to be sent by using the relay terminal. For example, after accessing the second access network device in a random access process, the remote terminal sends the second data to the second access network device.

S610. The remote terminal sends the second data to the second access network device.

Optionally, the remote terminal sends the second data to the second access network device by using the relay terminal; or the remote terminal directly sends the second data to the second access network device.

It may be understood that for data that is successfully transmitted to the first access network device before the remote terminal switches from the first access network device to the second access network device, the first access network device may forward, to the second access network device, a packet that is not delivered to a core network.

Optionally, in step S609, the first access network device may indicate the remote terminal to re-establish the PDCP layer entity. In this case, in step S610, the remote terminal sends the second data to the first access network device.

Optionally, there may be a plurality of relay terminals in steps S601 and S610. For example, as shown in FIG. 6c, the remote terminal sends uplink data to the first access network device by using a relay terminal A and a relay terminal B. In this case, in step S602, the first access network device separately sends the configuration information of the second function to the relay terminal A and the relay terminal B, to configure a second function A for the relay terminal A and configure a second function B for the relay terminal B.

It may be understood that after the second function A is configured for the relay terminal A, after receiving second indication information B sent by the relay terminal B, the relay terminal A triggers sending of second indication information A to the remote terminal, so that the remote terminal obtains the result of receiving the first data by the first access network device. The second indication information A is used by the remote terminal to obtain the result of receiving the first data by the first access network device, and the second indication information B is used by the relay terminal A to obtain the result of receiving the first data by the first access network device.

Based on the foregoing technical solution, before the remote terminal performs uplink data transmission, the first access network device configures the first function for the remote terminal, and configures the second function for the relay terminal, so that the RLC layer entity of the remote terminal sends the indication information to the PDCP layer entity only after the remote terminal confirms that the data has been successfully transmitted to the access network device, to indicate that data transmission succeeds. In addition, the remote terminal can learn of data that is not successfully transmitted to the access network device. When the remote terminal performs path switching, the data that is not successfully transmitted to the access network device is resent by the remote terminal to the access network device, so that the data that is not successfully transmitted to the access network device is not missed, thereby avoiding a data loss. In this way, lossless transmission of data during terminal switching in a relay scenario is implemented, and service continuity is ensured.

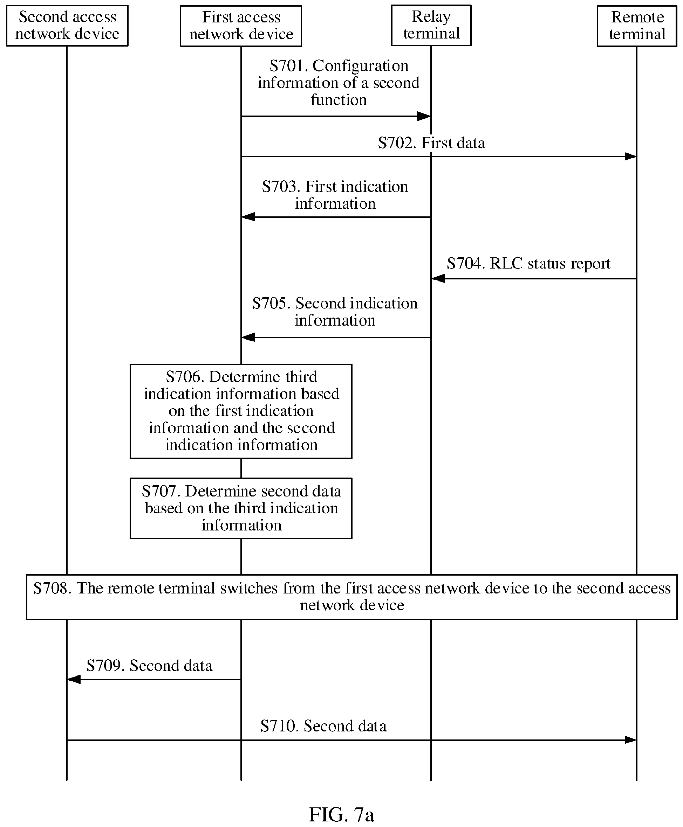

For example, an embodiment of this application further provides a communication method. As shown in FIG. 7a, the method includes steps S701 to S710, and may be applied to downlink data transmission in a relay scenario.

S701. A first access network device sends configuration information of a second function to a relay terminal.

The second function is used by the relay terminal to send second indication information to the first access network device. The second indication information is used by the first access network device to obtain a result of receiving first data by a remote terminal. It should be noted that, corresponding to the uplink data transmission, in this case, after the relay terminal is configured with a second function, an RLC layer entity of the relay terminal triggers sending of the second indication information to the first access network device after receiving an RLC control PDU from the remote terminal, and the relay terminal indicates, in the information based on an RLC status report fed back by the first access network device, information about an RLC SDU that has been successfully transmitted to the first access network device. The second information indicates whether the remote terminal successfully receives some or all packets in the first data.

Optionally, after receiving the RLC control PDU from the remote terminal, the RLC layer entity of the relay terminal triggers sending of the second indication information to the first access network device.

Optionally, the second function configured by the first access network device for the relay terminal can configure an RLC control PDU fed back by the relay terminal for only one or more remote terminals, and trigger sending of the second indication information to the first access network device. For example, the configuration information of the second function may carry identification information of the remote terminal. For example, the relay terminal is connected to a remote terminal A and a remote terminal B, and the first access network device may configure that the relay terminal triggers sending of the second indication information to the first access network device only after receiving an RLC control PDU of the remote terminal A.

Optionally, in step S701, the RLC control PDU may be an RLC status report.

S702. The first access network device sends first data to a remote terminal by using the relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number. For example, the first data includes four packets, and serial numbers corresponding to the packets are #100, #101, #102, and #103.

S703. After receiving the first data, the relay terminal sends first indication information to the first access network device.

The first indication information indicates a receiving status of a packet in the first data by the relay terminal. For example, the first indication information indicates whether each packet in the first data has been successfully received.

Optionally, the first indication information includes a first identifier of the first data.

Optionally, the first indication information is included in an RLC control PDU. For example, the RLC control PDU may be an RLC status report, and subsequent steps S704 to S710 are described by using an example in which the first indication information is included in the RLC status report.

S704. The remote terminal sends an RLC status report to the relay terminal.

S705. After receiving the RLC status report from the remote terminal, the relay terminal sends second indication information to the first access network device.

The second indication information indicates whether the remote terminal successfully receives some or all packets in the first data.

S706. The first access network device determines third indication information based on the first indication information and the second indication information.

The third indication information is used by an RLC layer entity of the first access network device to indicate, to a PDCP layer entity, an indication that a packet that is in the first data and that has been successfully transmitted to the remote terminal is successfully transmitted.

Optionally, the first access network device determines the third indication information based on a serial number corresponding to a packet successfully received by the relay terminal in the first indication information and a serial number corresponding to a packet successfully received by the remote terminal in the second indication information.

For example, the serial number corresponding to the packet successfully received by the relay terminal in the first indication information is #100, #101, and #103, and the serial number corresponding to the packet successfully received by the remote terminal in the second indication information is #100. In this case, the first access network device determines that the packet whose serial number is #100 is successfully received by the remote terminal, and generates the third indication information including the packet.

S707. The first access network device determines second data based on the third indication information.

Optionally, the first access network device determines the second data based on the serial number corresponding to the packet successfully received by the remote terminal in the third indication information and a serial number corresponding to each packet included in the first data.

It may be understood that, if serial numbers corresponding to some data in the first data are not included in the serial number corresponding to the data successfully received by the remote terminal in the third indication information, it indicates that the data corresponding to the serial numbers is not successfully transmitted to the remote terminal. The data corresponding to the serial numbers is the second data.

For example, the serial number corresponding to the packet successfully received by the remote terminal in the third indication information is #100, and the serial numbers corresponding to the packets included in the first data are #100, #101, #102, and #103. In this case, the first access network device determines the packets whose serial numbers are #101, #102, and #103 in the first data as the second data.

S708. The remote terminal switches from the first access network device to a second access network device.

Optionally, after the remote terminal switches from the first access network device to the second access network device, the remote terminal may be connected to the second access network device by using the relay terminal to transmit data, or may be directly connected to the second access network device to transmit data.

It may be understood that, if the remote terminal is still not within a coverage area of the second access network device after switching from the first access network device to the second access network device, the remote terminal is connected to the second access network device by using the relay terminal to transmit data; or if the remote terminal is within a coverage area of the second access network device after switching from the first access network device to the second access network device, the remote terminal is directly connected to the second access network device to transmit data. In this case, after the remote terminal accesses the second access network device in a random access process, the second access network device sends the second data to the remote terminal.

S709. The first access network device sends the second data to the second access network device.

S710. The second access network device sends the second data to the remote terminal.

Optionally, the second access network device sends the second data to the remote terminal by using the relay terminal; or the second access network device directly sends the second data to the remote terminal.

Optionally, in step S708, the first access network device may indicate the remote terminal to re-establish the PDCP layer entity. In this case, in steps S709 and S710, the first access network device sends the second data to the remote terminal.

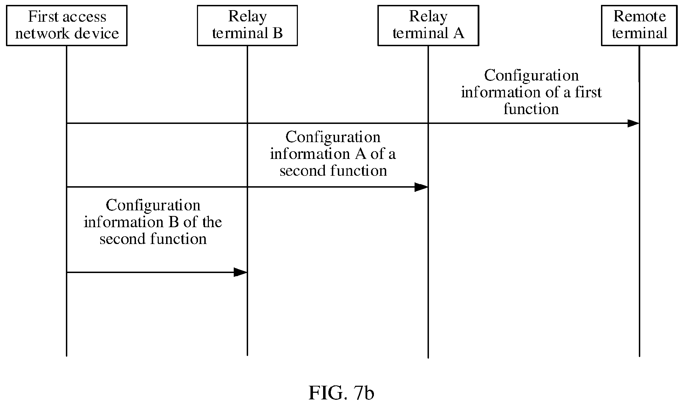

Optionally, there may be a plurality of relay terminals in steps S701 and S710. For example, as shown in FIG. 7b, the first access network device sends downlink data to the remote terminal by using a relay terminal A and a relay terminal B. In this case, in step S701, the first access network device separately sends the configuration information of the second function to the relay terminal A and the relay terminal B, to configure a second function A for the relay terminal A and configure a second function B for the relay terminal B.

It may be understood that after the second function B is configured for the relay terminal B, after receiving second indication information A sent by the relay terminal A, the relay terminal B triggers sending of second indication information B to the first access network device, so that the first access network device obtains the result of receiving the first data by the remote terminal. The second indication information B is used by the first access network device to obtain the result of receiving the first data by the remote terminal, and the second indication information A is used by the relay terminal B to obtain the result of receiving the first data by the remote terminal.

Based on the foregoing technical solution, before the first access network device performs downlink data transmission, the first access network device configures the second function for the relay terminal, so that the RLC layer entity of the first access network device sends the indication information to the PDCP layer entity only after the first access network device confirms that the data has been successfully transmitted to the remote terminal, to indicate that data transmission succeeds. In addition, the first access network device can learn of data that is not successfully transmitted to the remote terminal. When the remote terminal performs path switching, data that is not successfully transmitted to the remote terminal is resent by the second access network device to the remote terminal, so that the data that is not successfully transmitted to the remote terminal is not missed, thereby avoiding a data loss. In this way, lossless transmission of data during terminal switching in a relay scenario is implemented, and service continuity is ensured.

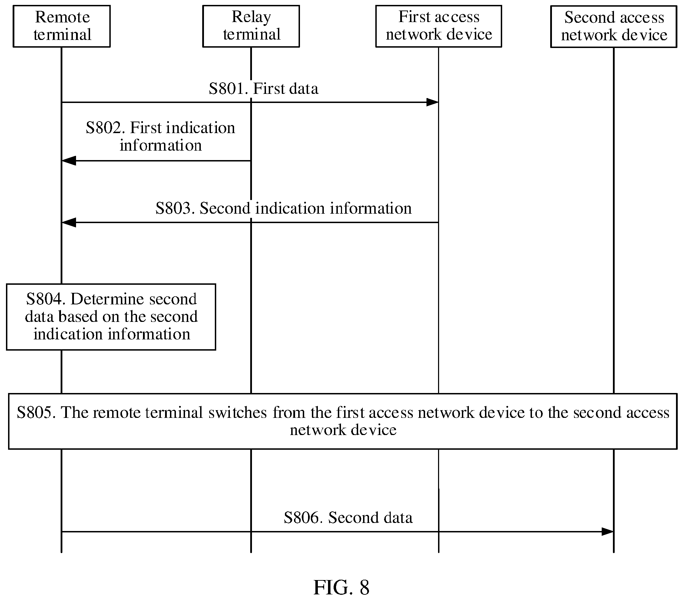

For example, an embodiment of this application further provides a communication method. As shown in FIG. 8, the method includes steps S801 to S806, and may be applied to uplink data transmission in a relay scenario.

S801. A remote terminal sends first data to a first access network device by using a relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number. For example, the first data includes four packets, and serial numbers corresponding to the packets are #100, #101, #102, and #103.

S802. After receiving the first data, the relay terminal sends first indication information to the remote terminal.

Optionally, the first indication information includes a first identifier of the first data.

Optionally, the first indication information is included in an RLC control PDU. For example, the RLC control PDU may be an RLC status report.

Optionally, the first indication information includes a serial number of the first data and reception acknowledgement information of the first data. The reception acknowledgement information of the first data indicates whether the relay terminal successfully receives data corresponding to each serial number in the first data.

S803. The first access network device sends second indication information to the remote terminal.

Optionally, the second indication information is included in a PDCP status report fed back by the first access network device to the remote terminal.

Optionally, the first access network device carries the second indication information by using a PDCP control PDU, to send the second indication information to the remote terminal. For example, the second indication information includes a COUNT value. The COUNT value is a highest COUNT value of PDCP SDUs consecutively received by the first access network device, or a highest COUNT value plus 1, and is updated based on a packet in the received first data. For example, the COUNT value may be an RX_DELIV parameter maintained by a PDCP layer entity on a receive side of the first access network device. The RX_DELIV parameter is a state variable maintained by the PDCP layer entity on the receive side, indicating a COUNT value of a first PDCP SDU that has not been delivered to an upper layer and is still waiting for reception.

Optionally, the first access network device may periodically send the second indication information to the remote terminal. Alternatively, after receiving request information from the remote terminal, the first access network device feeds back the second indication information to the remote terminal. The request message is for requesting the first access network device to send the second indication information.

S804. The remote terminal determines second data based on the second indication information.

Optionally, the remote terminal maintains a variable, for recording a COUNT value received from the first access network device by using the second indication information. The variable may be initialized to 0. Each time after the second indication information is received, the variable is updated to the COUNT value indicated in the second indication information. The remote terminal uses a PDCP SDU corresponding to the COUNT value recorded in the variable as a first packet included in the second data. For example, the COUNT value included in the second indication information is #101. After receiving the second indication information, the remote terminal updates the maintained variable to #101, and uses a PDCP SDU corresponding to #101 as the first packet included in the second data.

S805. The remote terminal switches from the first access network device to a second access network device.

Optionally, after the remote terminal switches from the first access network device to the second access network device, the remote terminal may be connected to the second access network device by using the relay terminal to transmit data, or may be directly connected to the second access network device to transmit data.

It may be understood that, if the remote terminal is still not within a coverage area of the second access network device after switching from the first access network device to the second access network device, the remote terminal is connected to the second access network device by using the relay terminal to transmit data; or if the remote terminal is within a coverage area of the second access network device after switching from the first access network device to the second access network device, the remote terminal is directly connected to the second access network device to transmit data.

S806. The remote terminal sends the second data to the second access network device.

Optionally, the remote terminal sends the second data to the second access network device by using the relay terminal; or the remote terminal directly sends the second data to the second access network device.

It may be understood that for data that is successfully transmitted to the first access network device before the remote terminal switches from the first access network device to the second access network device, the first access network device may forward, to the second access network device, a packet that is not delivered to a core network.

Optionally, in the foregoing embodiment, a function of the CONUT value may also be replaced by an SN.

Based on the foregoing technical solution, the first access network device feeds back a COUNT value or an SN to the remote terminal, so that the remote terminal can learn of data that is successfully uploaded to the first access network device, and therefore, the remote terminal can learn of data that is not successfully transmitted to the access network device. When the remote terminal performs path switching, the data that is not successfully transmitted to the access network device is resent by the remote terminal to the access network device, so that the data that is not successfully transmitted to the access network device is not missed, thereby avoiding a data loss. In this way, lossless transmission of data during terminal switching in a relay scenario is implemented, and service continuity is ensured.

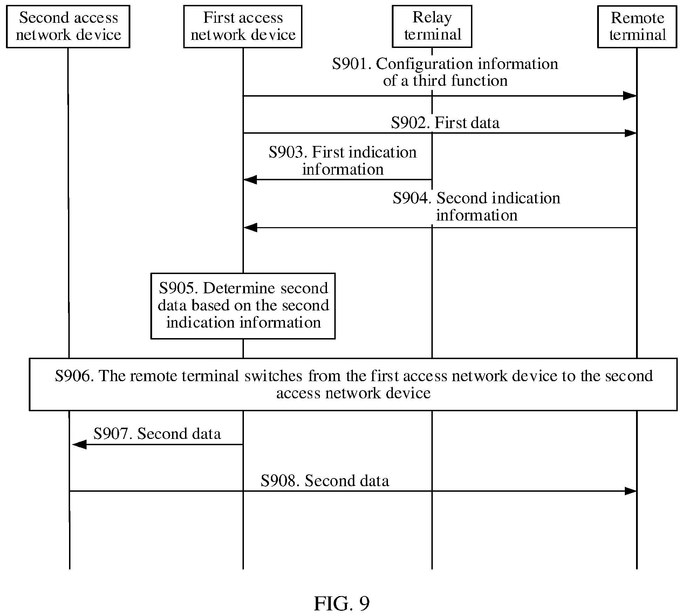

For example, an embodiment of this application further provides a communication method. As shown in FIG. 9, the method includes steps S901 to S908, and may be applied to downlink data transmission in a relay scenario.

S901. A first access network device sends configuration information of a third function to a remote terminal by using a relay terminal.

The third function is used by the remote terminal to send second indication information to the first access network device after receiving first data. The second indication information includes a COUNT value. The COUNT value is a highest COUNT value of PDCP SDUs consecutively received by the first access network device, or a highest COUNT value plus 1, and is updated based on a packet in the received first data. For example, the COUNT value may be an RX_DELIV parameter maintained by a PDCP layer entity on a receive side of the first access network device. The RX_DELIV parameter is a state variable maintained by the PDCP layer entity on the receive side, indicating a COUNT value of a first PDCP SDU that has not been delivered to an upper layer and is still waiting for reception.

Optionally, the remote terminal may periodically send the second indication information to the first access network device. For example, the first access network device configures a timer for the remote terminal, for example, count feedback Timer. When a PDCP layer entity of the remote terminal receives a first downlink PDCP PDU, the timer is started. When the timer expires, the remote terminal triggers generation of the second indication information and sends the second indication information to the first access network device. Then, the remote terminal restarts the timer count_feedback_Timer. Optionally, when the timer expires, the remote terminal triggers generation of the second indication information and sends the second indication information to the first access network device only when determining that a highest COUNT value of PDCP PDUs consecutively received is different from a value fed back last time, or no COUNT value is fed back, and then restarts the timer. Otherwise, the remote terminal may directly restart the timer. Alternatively, after receiving request information from the first access network device, the remote terminal feeds back the second indication information to the first access network device. The request message is for requesting the remote terminal to send the second indication information.

S902. The first access network device sends first data to the remote terminal by using the relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number. For example, the first data includes four packets, and serial numbers corresponding to the packets are #100, #101, #102, and #103.

S903. After receiving the first data, the relay terminal sends first indication information to the first access network device.

Optionally, the first indication information is an RLC status report fed back by the relay terminal to the first access network device.

Optionally, the first indication information includes a serial number of the first data and reception acknowledgement information of the first data. The reception acknowledgement information of the first data indicates whether the relay terminal successfully receives data corresponding to each serial number in the first data.

S904. The remote terminal sends second indication information to the first access network device.

S905. The first access network device determines second data based on the second indication information.

Optionally, the first access network device maintains a variable, for recording a COUNT value received from the remote terminal by using the second indication information. The variable may be initialized to 0. Each time after the second indication information is received, the variable is updated to the COUNT value indicated in the second indication information. The first access network device uses a PDCP SDU corresponding to the COUNT value recorded in the variable as a first packet included in the second data.

For example, the COUNT value included in the second indication information is #101. After receiving the second indication information, the first access network device updates the maintained variable to #101, and uses a PDCP SDU corresponding to #101 as the first packet included in the second data.

S906. The remote terminal switches from the first access network device to a second access network device.

Optionally, after the remote terminal switches from the first access network device to the second access network device, the remote terminal may be connected to the second access network device by using the relay terminal to transmit data, or may be directly connected to the second access network device to transmit data.

It may be understood that, if the remote terminal is still not within a coverage area of the second access network device after switching from the first access network device to the second access network device, the remote terminal is connected to the second access network device by using the relay terminal to transmit data; or if the remote terminal is within a coverage area of the second access network device after switching from the first access network device to the second access network device, the remote terminal is directly connected to the second access network device to transmit data.

S907. The first access network device forwards the second data to the second access network device.

S908. The second access network device sends the second data to the remote terminal.

Optionally, the second access network device sends the second data to the remote terminal by using the relay terminal; or the second access network device directly sends the second data to the remote terminal.

Optionally, in the foregoing embodiment, a function of the CONUT value may also be replaced by an SN.

Based on the foregoing technical solution, before the first access network device performs downlink data transmission, the first access network device configures a third function for the remote terminal, so that the remote terminal feeds back a COUNT value or an SN to the first access network device. Therefore, the first access network device can learn of data that is successfully uploaded to the remote terminal, and the first access network device can learn of data that is not successfully transmitted to the remote terminal. When the remote terminal performs path 20954761.1 switching, data that is not successfully transmitted to the remote terminal is resent by the second access network device to the remote terminal, so that the data that is not successfully transmitted to the remote terminal is not missed, thereby avoiding a data loss. In this way, lossless transmission of data during terminal switching in a relay scenario is implemented, and service continuity is ensured.

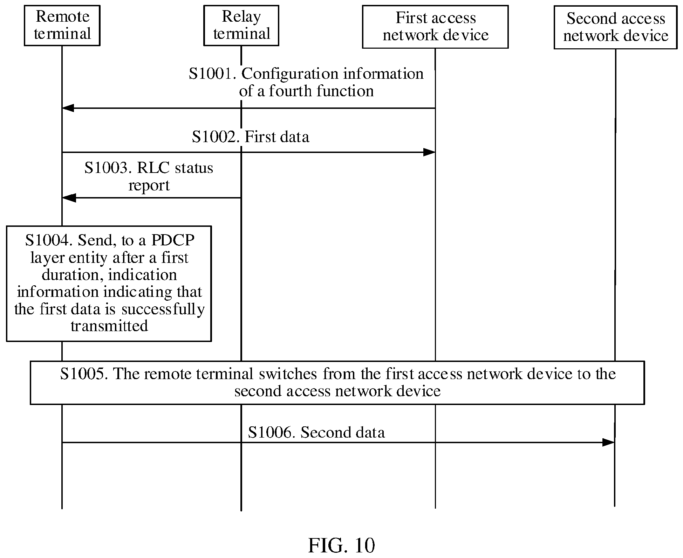

For example, an embodiment of this application further provides a communication method. As shown in FIG. 10, the method includes steps S1001 to S1006, and may be applied to uplink data transmission in a relay scenario.

S1001. The first access network device sends configuration information of a fourth function to the remote terminal by using the relay terminal.

The fourth function is used by an RLC layer entity of the remote terminal to send, to a PDCP layer entity after receiving an RLC control PDU sent by the relay terminal, an indication indicating that the first data is successfully transmitted after a delay of a first duration. The first duration may be specifically set by the remote terminal based on an actual data transmission status, or may be configured by the first access network device for the remote terminal.

For example, a timer such as delay_ACK_Indication-Timer may be used for controlling an AM RLC layer entity to send, to the PDCP layer entity after delaying the first duration, indication information indicating that data transmission succeeds. After receiving the RLC control PDU fed back by the relay terminal, the RLC layer entity of the remote terminal starts the timer for the RLC control PDU. After the timer expires, for data that is in the RLC control PDU and that has been fed back as being successfully transmitted, the remote terminal sends, to the PDCP layer entity, indication information indicating that data transmission succeeds again.

Optionally, in step S1001, the RLC control PDU may be an RLC status report, and subsequent steps S1002 to S1006 are described by using an example in which the RLC control PDU is an RLC status report.

S1002. The remote terminal sends first data to the first access network device by using the relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number, and the serial number is a serial number corresponding to the data on an RLC layer. For example, the first data includes four pieces of data, and serial numbers corresponding to the data are #100, #101, #102, and #103.

S1003. The relay terminal sends an RLC status report to the remote terminal.

S1004. An RLC layer entity of the remote terminal sends, to a PDCP layer entity after a first duration, indication information indicating that the first data is successfully transmitted.

It may be understood that after receiving the RLC status report sent by the relay terminal, the RLC layer entity of the remote terminal indicates, to the PDCP layer entity after the first duration, indication information indicating that each packet in the first data is successfully transmitted. By setting the first duration, a period of time can be reserved for transmission of the first data between the relay terminal and the first access network device, and the relay terminal can successfully transmit the first data to the first access network device within the period of time.

Optionally, after receiving an RLC status report fed back by the first access network device, the relay terminal resends, to the first access network device within the first duration, data that fails to be received by the first access network device. For example, if the relay terminal successfully receives data whose serial numbers are #100, #101, and #102, and the RLC status report fed back by the first access network device indicates that the first access network device successfully receives data whose serial number is #100, the relay terminal resends the data whose serial numbers are #101 and #102 to the first access network device within the first duration.

S1005. The remote terminal switches from the first access network device to a second access network device.

Optionally, after the remote terminal switches from the first access network device to the second access network device, the remote terminal may be connected to the second access network device by using the relay terminal to transmit data, or may be directly connected to the second access network device to transmit data.

It may be understood that, if the remote terminal is still not within a coverage area of the second access network device after switching from the first access network device to the second access network device, the remote terminal is connected to the second access network device by using the relay terminal to transmit data; or if the remote terminal is within a coverage area of the second access network device after switching from the first access network device to the second access network device, the remote terminal is directly connected to the second access network device to transmit data.

S 1006. The remote terminal sends second data to the second access network device.

The second data includes a PDCP SDU that is not received by a PDCP layer of the remote terminal and that is indicated by the RLC layer to be successfully transmitted.

Optionally, the second data includes a first PDCP SDU that is not received by the PDCP layer of the remote terminal and that is indicated by the RLC layer to be successfully transmitted, and subsequent consecutive PDCP SDUs.

Optionally, the remote terminal sends the second data to the second access network device by using the relay terminal; or the remote terminal directly sends the second data to the second access network device.

It may be understood that for data that is successfully transmitted to the first access network device before the remote terminal switches from the first access network device to the second access network device, the first access network device may forward, to the second access network device, a packet that is not delivered to a core network.

Based on the foregoing technical solution, before the remote terminal performs uplink data transmission, the first access network device configures the fourth function for the remote terminal, so that after receiving the RLC status report from the relay terminal, the remote terminal sends the indication information to the PDCP layer entity after the first duration, to indicate that data transmission succeeds. A period of time is reserved for transmission of the first data between the relay terminal and the first access network device, and the relay terminal can successfully transmit the first data to the first access network device within the period of time. In this way, after the remote terminal performs path switching, the remote terminal continues to upload data starting from the data that is not successfully transmitted and that is fed back by the relay terminal before the switching, and does not miss the data that is not successfully transmitted to the access network device, thereby avoiding a data loss. In this way, lossless transmission of data during terminal switching in a relay scenario is implemented, and service continuity is ensured.

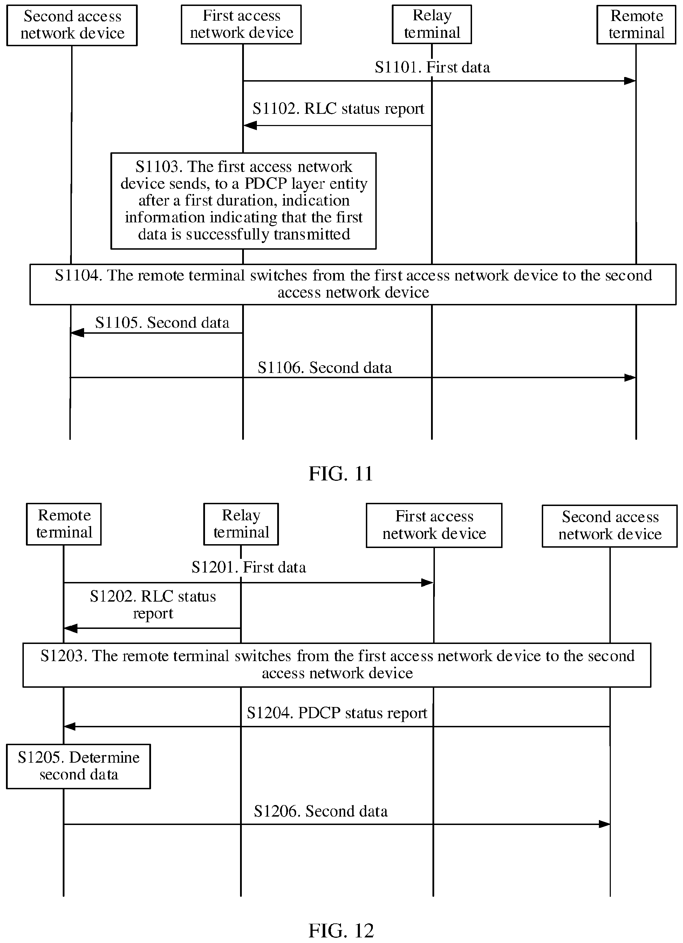

For example, an embodiment of this application further provides a communication method. As shown in FIG. 11, the method includes steps S1101 to S1106, and may be applied to downlink data transmission in a relay scenario.

S1101. A first access network device sends first data to a remote terminal by using a relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number, and the serial number is a serial number corresponding to the packet on an RLC layer. For example, the first data includes four packets, and serial numbers corresponding to the packets are #100, #101, #102, and #103.

Optionally, after the first access network device sends the first data to the remote terminal by using the relay terminal, the relay terminal sends an RLC control PDU to the first access network device. For example, the RLC control PDU may be an RLC status report, and subsequent steps S1102 to S1106 are described by using an example in which the RLC control PDU is an RLC status report.

S1102. The relay terminal sends an RLC status report to the first access network device.

S1103. The first access network device sends, to a PDCP layer entity after a first duration, indication information indicating that the first data is successfully transmitted.

It may be understood that after receiving the RLC status report sent by the relay terminal, an RLC layer entity of the first access network device sends, to the PDCP layer entity after the first duration, the indication information indicating that each packet in the first data is successfully transmitted. By setting the first duration, a period of time can be reserved for transmission of the first data between the relay terminal and the remote terminal, and the relay terminal can successfully transmit the first data to the remote terminal within the period of time. The first duration may be specifically set by the first access network device based on an actual data transmission status, or may be set by a central unit (central unit, CU) of the first access network device based on an actual situation, and is notified to a distributed unit (distributed unit, DU) by using an F1 interface message transmitted between the central unit and the distributed unit.

Optionally, after receiving an RLC status report fed back by the remote terminal, the relay terminal resends, to the remote terminal within the first duration, data that fails to be received by the remote terminal. For example, if the relay terminal successfully receives data whose serial numbers are #100, #101, and #102, and the RLC status report fed back by the remote terminal indicates that the remote terminal successfully receives data whose serial number is #100, the relay terminal resends the data whose serial numbers are #101 and #102 to the remote terminal within the first duration.

S1104. The remote terminal switches from the first access network device to a second access network device.

Optionally, after the remote terminal switches from the first access network device to the second access network device, the remote terminal may be connected to the second access network device by using the relay terminal to transmit data, or may be directly connected to the second access network device to transmit data.

It may be understood that, if the remote terminal is still not within a coverage area of the second access network device after switching from the first access network device to the second access network device, the remote terminal is connected to the second access network device by using the relay terminal to transmit data; or if the remote terminal is within a coverage area of the second access network device after switching from the first access network device to the second access network device, the remote terminal is directly connected to the second access network device to transmit data.

S1105. The first access network device sends second data to the second access network device.

The second data includes a PDCP SDU that is not received by a PDCP layer of the remote terminal and that is indicated by the RLC layer to be successfully transmitted.

Optionally, the second data includes a first PDCP SDU that is not received by the PDCP layer of the remote terminal and that is indicated by the RLC layer to be successfully transmitted, and subsequent consecutive PDCP SDUs.

S1106. The second access network device sends the second data to the remote terminal.

Optionally, the second access network device sends the second data to the remote terminal by using the relay terminal; or the second access network device directly sends the second data to the remote terminal.

Based on the foregoing technical solution, after receiving the RLC status report from the relay terminal, the first access network device sends the indication information to the PDCP layer entity after the first duration, to indicate that data transmission succeeds. A period of time is reserved for transmission of the first data between the relay terminal and the remote terminal, and the relay terminal can successfully transmit the first data to the remote terminal within the period of time. After the remote terminal performs path switching, the second access network device continues to upload data starting from the data that is not successfully transmitted and that is fed back by the relay terminal before the switching, and does not miss the data that is not successfully transmitted to the remote terminal, thereby avoiding a data loss. In this way, lossless transmission of data during terminal switching in a relay scenario is implemented, and service continuity is ensured.

For example, an embodiment of this application further provides a communication method. As shown in FIG. 12, the method includes steps S1201 to S1206, and may be applied to uplink data transmission in a relay scenario.

S1201. A remote terminal sends first data to a first access network device by using a relay terminal.

The first data may include a plurality of packets. Further, the first data may include a plurality of packets sent simultaneously or a plurality of packets sent successively.

Optionally, the first data includes a first identifier. The first identifier may include a serial number of the first data.

It may be understood that each packet in the first data has a corresponding serial number, and the serial number is a serial number corresponding to the data on an RLC layer. For example, the first data includes four packets, and serial numbers corresponding to the packets are #100, #101, #102, and #103.

Optionally, after the remote terminal sends the first data to the first access network device by using the relay terminal, the relay terminal sends an RLC control PDU to the remote terminal. For example, the RLC control PDU may be an RLC status report, and subsequent steps S1202 to S1206 are described by using an example in which the RLC control PDU is an RLC status report.

S1202. The relay terminal sends an RLC status report to the remote terminal.

S1203. The remote terminal switches from the first access network device to a second access network device.

Optionally, after the remote terminal switches from the first access network device to the second access network device, the remote terminal may be connected to the second access network device by using the relay terminal to transmit data, or may be directly connected to the second access network device to transmit data.

It may be understood that, if the remote terminal is still not within a coverage area of the second access network device after switching from the first access network device to the second access network device, the remote terminal is connected to the second access network device by using the relay terminal to transmit data; or if the remote terminal is within a coverage area of the second access network device after switching from the first access network device to the second access network device, the remote terminal is directly connected to the second access network device to transmit data.

S1204. The second access network device sends a PDCP status report to the remote terminal.

S1205. The remote terminal determines second data.

Optionally, the remote terminal determines data that is indicated in the PDCP status report and that is not successfully transmitted to the first access network device as the second data.

Optionally, the remote terminal determines a packet that is indicated in the PDCP status report and that is not successfully transmitted to the first access network device and that is not sent to the second access network device after the switching is completed as the second data.

S1206. The remote terminal sends the second data to the second access network device.

Optionally, the remote terminal sends the second data to the second access network device by using the relay terminal; or the remote terminal directly sends the second data to the second access network device.

It may be understood that, for data that is successfully transmitted to the first access network device before the remote terminal switches from the first access network device to the second access network device, the second access network device can send a request to the first access network device, to request the first access network device to send the data to the second access network device.

Optionally, in the foregoing embodiment, a function of a CONUT value may also be replaced by an SN.

Optionally, in the foregoing embodiment, after the remote terminal switches from the first access network device to the second access network device, the remote terminal directly sends the second data to the second access network device. In this case, the second data further includes PDCP SDUs corresponding to M packets whose COUNT values or SNs are before a COUNT value or SN of a first packet that is not successfully transmitted. A value of M is determined by the remote terminal.

For example, if COUNT values corresponding to packets that are not successfully transmitted are #101, #102, and #103, after the remote terminal switches from the first access network device to the second access network device, the remote terminal directly sends, to the second access network device, PDCP SDUs corresponding to packets whose CONUT values are #98, #99, #100, #101, #102 and #103.

It may be understood that, after the remote terminal switches from the first access network device to the second access network device, the remote terminal directly sends, to the second access network device, the second data determined by the remote terminal, and the second access network device does not need to additionally feed back a transmission result of the first data. This reduces signaling interaction between the remote terminal and the second access network device, and saves network resources.

Based on the foregoing technical solution, after the remote terminal performs path switching, the remote terminal learns of, based on the PDCP report sent by the second access network device, the data that is not successfully transmitted to the access network device, and resends the data, so that the data that is not successfully transmitted to the access network device is not missed, thereby avoiding a data loss. In this way, lossless transmission of data during terminal switching in a relay scenario is implemented, and service continuity is ensured.

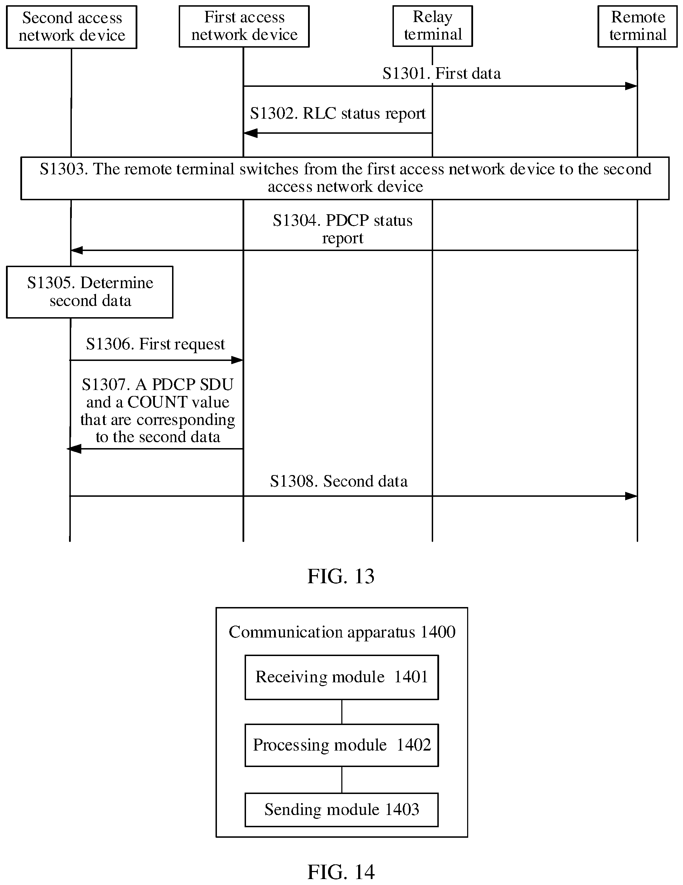

For example, an embodiment of this application further provides a communication method. As shown in FIG. 13, the method includes steps S1301 to S1308, and may be applied to downlink data transmission in a relay scenario.

S1301. A first access network device sends first data to a remote terminal by using a relay terminal.

The first data may include a plurality of pieces of data. Further, the first data may include a plurality of pieces of data sent simultaneously or a plurality of pieces of data sent successively.

Optionally, the first data includes a first identifier. The first identifier may include a serial number of the first data.

It may be understood that each piece of data in the first data has a corresponding serial number, and the serial number is a serial number corresponding to the data on an RLC layer. For example, the first data includes four packets, and serial numbers corresponding to the packets are #100, #101, #102, and #103.

Optionally, after the first access network device sends the first data to the remote terminal by using the relay terminal, the relay terminal sends an RLC control PDU to the first access network device. For example, the RLC control PDU may be an RLC status report, and subsequent steps S1302 to S1308 are described by using an example in which the RLC control PDU is an RLC status report.

S1302. The relay terminal sends an RLC status report to the first access network device.

S1303. The remote terminal switches from the first access network device to a second access network device.

Optionally, after the remote terminal switches from the first access network device to the second access network device, the remote terminal may be connected to the second access network device by using the relay terminal to transmit data, or may be directly connected to the second access network device to transmit data.

It may be understood that, if the remote terminal is still not within a coverage area of the second access network device after switching from the first access network device to the second access network device, the remote terminal is connected to the second access network device by using the relay terminal to transmit data; or if the remote terminal is within a coverage area of the second access network device after switching from the first access network device to the second access network device, the remote terminal is directly connected to the second access network device to transmit data.

S1304. The remote terminal sends a PDCP status report to the second access network device.

S1305. The second access network device determines second data.

Optionally, the second access network device determines data that is indicated in the PDCP status report and that is not successfully transmitted to the remote terminal as the second data.

Optionally, the second access network device determines, as the second data, a packet that is indicated in the PDCP status report and not successfully transmitted to the remote terminal and that is not sent to the remote terminal after the switching is completed.

S1306. The second access network device sends a first request to the first access network device.

The first request is for requesting the second access network device to send, to the first access network device, a PDCP SDU and a COUNT value that are corresponding to the second data.

Optionally, the first request may include information such as an identifier DRB ID of a data radio bearer and/or a tunnel endpoint identifier for data forwarding.

Optionally, the first request may include information included in the PDCP status report sent by the remote terminal.

S1307. The first access network device sends, to the first access network device, a PDCP SDU and a COUNT value that are corresponding to the second data.

S1308. The second access network device sends the second data to the remote terminal.

Optionally, the second access network device sends the second data to the remote terminal by using the relay terminal; or the second access network device directly sends the second data to the remote terminal.

Optionally, in the foregoing embodiment, a function of the CONUT value may also be replaced by an SN.

Optionally, in the foregoing embodiment, after the remote terminal switches from the first access network device to the second access network device, the first access network device directly sends the second data to the second access network device. In this case, the second data further includes PDCP SDUs corresponding to N packets whose COUNT values or SNs are before a COUNT value or SN of a first packet that is not successfully transmitted. A value of N is determined by the first access network device.

For example, if COUNT values corresponding to packets that are not successfully transmitted are #101, #102, and #103, after the remote terminal switches from the first access network device to the second access network device, the first access network device directly sends, to the second access network device, PDCP SDUs corresponding to packets whose CONUT values are #98, #99, #100, #101, #102 and #103.

It may be understood that, after the remote terminal switches from the first access network device to the second access network device, the first access network device directly sends, to the second access network device, the second data determined by the first access network device, and the second access network device does not need to additionally send a request message to request to forward a packet. This reduces signaling interaction between the first access network device and the second access network device, and saves network resources.

Based on the foregoing technical solution, after the remote terminal performs path switching, the second access network device learns of, based on the PDCP report sent by the remote terminal, the data that is not successfully transmitted to the remote terminal, requests the first access network device to forward the PDCP SDU and the COUNT value or the SN of the data, and then resends the data to the remote terminal, so that the data that is not successfully transmitted to the remote terminal is not missed, thereby avoiding a data loss. In this way, lossless transmission of data during terminal switching in a relay scenario is implemented, and service continuity is ensured.

The foregoing mainly describes the solutions provided in embodiments of this application from a perspective of method steps. It may be understood that, to implement the foregoing functions, a computer includes corresponding hardware structures and/or software modules for performing the functions. A person skilled in the art should be easily aware that, in combination with modules and algorithm steps of the examples described in embodiments disclosed in this specification, this application can be implemented by a combination of hardware and computer software. A person skilled in the art may use different methods to implement the described functions for each particular application, but it should not be considered that the implementation goes beyond the scope of this application as defined by the appended claims.

In embodiments of this application, the computer may be divided into functional modules based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. In an actual implementation, there may be another division manner.

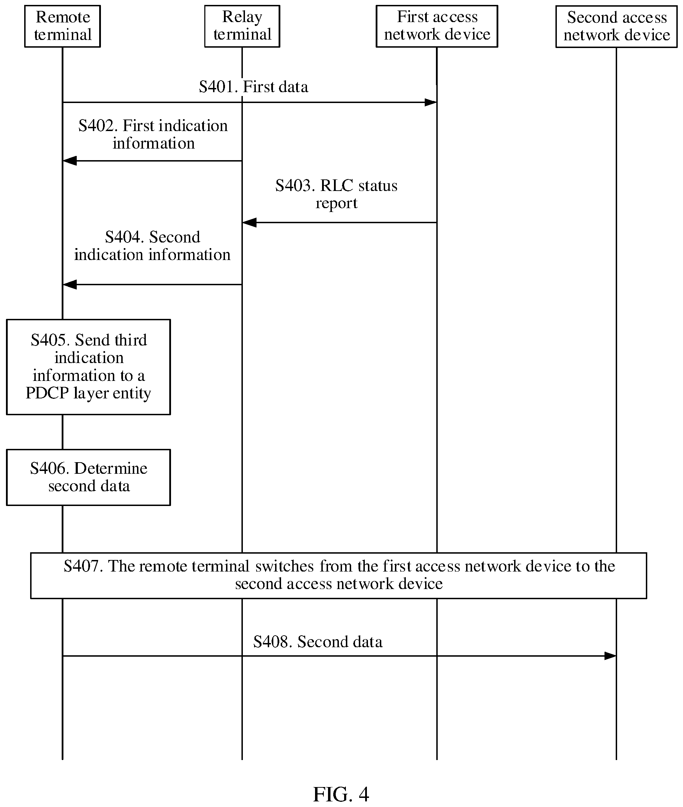

The communication methods provided in embodiments of this application are described above in detail with reference to FIG. 4 to FIG. 13. The following describes in detail a communication apparatus provided in embodiments of this application with reference to FIG. 14 to FIG. 17.

For example, FIG. 14 is a schematic diagram of a structure of a communication apparatus according to an embodiment of this application. As shown in FIG. 14, the communication apparatus 1400 includes a receiving module 1401, a processing module 1402, and a sending module 1403. For ease of description, FIG. 14 shows only main components of the communication apparatus.

In a possible embodiment, the receiving module 1401 is configured to receive first indication information from a relay terminal.

The receiving module 1401 is further configured to receive second indication information.

The processing module 1402 is configured to determine second data based on the second indication information, where the second data includes data that is in the first data and that is not received by a first access network device.

The sending module 1403 is configured to send the second data to the relay terminal or a second access network device.

Optionally, the processing module 1402 is further configured to determine the second data based on the first indication information and the second indication information.

Optionally, the receiving module 1401 is further configured to receive configuration information of a first function from the first access network device.

Optionally, the processing module 1402 is further configured to determine the second data based on third indication information.

In another possible embodiment, the sending module 1403 in FIG. 14 is configured to send the second data to the relay terminal or a remote terminal.

Optionally, the processing module 1402 is further configured to determine the second data based on the first indication information and the second indication information, where the second data includes data that is in the first data and that is not received by the remote terminal.

Optionally, the sending module 1403 is further configured to send configuration information of a second function to the relay terminal.

In addition, for a technical effect of the communication apparatus in FIG. 14, refer to the technical effect of the communication method in the foregoing embodiment. Details are not described herein again.

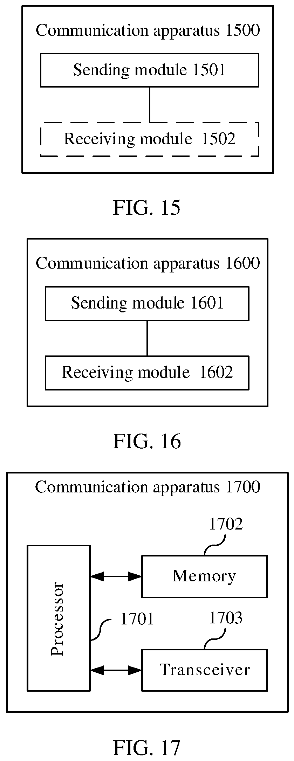

For example, FIG. 15 is a schematic diagram of a structure of another communication apparatus according to an embodiment of this application. As shown in FIG. 15, the communication apparatus 1500 includes a sending module 1501. For ease of description, FIG. 15 shows only main components of the communication apparatus.

In a possible embodiment, the sending module 1501 is configured to send first indication information to a remote terminal.

The sending module 1501 is further configured to send second indication information to the remote terminal.

The sending module 1501 is further configured to send second data to a second access network device.

Optionally, the communication apparatus 1500 further includes a receiving module 1502 (shown by a dashed line in FIG. 15). The receiving module 1502 is configured to receive the second indication information from a first access network device.

Optionally, the sending module 1501 is further configured to send the second indication information from the first access network device to the remote terminal.

Optionally, the receiving module 1502 is further configured to receive configuration information of a third function from the first access network device.

In another possible embodiment, the sending module 1501 in FIG. 15 is configured to send the first indication information to the first access network device.

The sending module 1501 is further configured to send the second indication information to the first access network device.

The sending module 1501 is further configured to send the second data to the remote terminal.

Optionally, the receiving module 1502 is configured to receive the second indication information from the remote terminal.

Optionally, the sending module 1501 is further configured to send the second indication information from the remote terminal to the first access network device.

Optionally, the receiving module 1502 is further configured to receive configuration information of a second function from the first access network device.

In addition, for a technical effect of the communication apparatus in FIG. 15, refer to the technical effect of the communication method in the foregoing embodiment. Details are not described herein again.

For example, FIG. 16 is a schematic diagram of a structure of another communication apparatus according to an embodiment of this application. As shown in FIG. 16, the communication apparatus 1600 includes a sending module 1601 and a receiving module 1602. For ease of description, FIG. 16 shows only main components of the communication apparatus.

In a possible embodiment, the sending module 1601 is configured to send second indication information to a remote terminal.

The receiving module 1602 is configured to receive second data from a relay terminal or the remote terminal.

Optionally, the sending module 1601 is further configured to send configuration information of a first function to the remote terminal.

In another possible embodiment, the sending module 1601 in FIG. 16 is configured to send the second indication information to a first access network device.

The receiving module 1602 is configured to receive the second data sent by the relay terminal or a second access network device.

In addition, for a technical effect of the communication apparatus in FIG. 16, refer to the technical effect of the communication method in the foregoing embodiment. Details are not described herein again.

For example, FIG. 17 is a schematic diagram of a structure of another communication apparatus according to an embodiment of this application.

The communication apparatus may be a terminal device or a network device, or may be a chip (system) or another component or assembly that may be disposed in the terminal device or the network device. As shown in FIG. 17, the communication apparatus 1700 may include a processor 1701. Optionally, the communication apparatus 1700 may further include a memory 1702 and/or a transceiver 1703. The processor 1701 is coupled to the memory 1702 and the transceiver 1703, for example, may be connected through a communication bus.

The following specifically describes each component of the communication apparatus 1700 with reference to FIG. 17.

The processor 1701 is a control center of the communication apparatus 1700, and may be one processor, or may be a collective name of a plurality of processing elements. For example, the processor 1701 is one or more central processing units (central processing units, CPUs), or may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1701 may perform various functions of the communication apparatus 1700 by running or executing a software program stored in the memory 1702 and invoking data stored in the memory 1702.

During a specific implementation, in an embodiment, the processor 1701 may include one or more CPUs.

During a specific implementation, in an embodiment, the communication apparatus 1700 may also include a plurality of processors. Each of the processors may be a single-core processor (single-CPU), or may be a multi-core processor (multi-CPU). The processor herein may be one or more communication devices, circuits, and/or processing cores configured to process data (for example, computer program instructions).

The memory 1702 is configured to store a software program for executing the solutions of this application, and the processor 1701 controls the execution. For a specific implementation, refer to the foregoing method embodiment. Details are not described herein again.

Optionally, the memory 1702 may be a read-only memory (read-only memory, ROM) or another type of static storage communication device that can store static information and instructions, or a random access memory (random access memory, RAM) or another type of dynamic storage communication device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital versatile disc, a Blu-ray disc, and the like), a magnetic disk storage medium or another magnetic storage communication device, or any other medium that can be used to carry or store expected program code in a form of an instruction or a data structure and that can be accessed by a computer. However, this is not limited thereto. The memory 1702 may be integrated with the processor 1701, or may exist independently, and is coupled to the processor 1701 through an input/output port (not shown in FIG. 17) of the communication apparatus 1700. This is not specifically limited in this embodiment of this application.

The transceiver 1703 is configured to communicate with another communication apparatus. For example, the communication apparatus 1700 is a terminal device, and the transceiver 1703 may be configured to communicate with a network device or communicate with another terminal device. For another example, the communication apparatus 1700 is a network device, and the transceiver 1703 may be configured to communicate with a terminal device or communicate with another network device.

Optionally, the transceiver 1703 may include a receiver and a transmitter (not separately shown in FIG. 17). The receiver is configured to implement a receiving function, and the transmitter is configured to implement a sending function.

Optionally, the transceiver 1703 may be integrated with the processor 1701, or may exist independently, and is coupled to the processor 1701 through an input/output port (not shown in FIG. 17) of the communication apparatus 1700. This is not specifically limited in this embodiment of this application.

It should be noted that the structure of the communication apparatus 1700 shown in FIG. 17 does not constitute a limitation on the communication apparatus. An actual communication apparatus may include more or fewer components than those shown in the figure, or combine some components, or use a different component deployment.

An embodiment of this application further provides a communication system. The communication system includes one or more terminal devices and one or more network devices.

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor.

It may be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by software, hardware (for example, a circuit), firmware, or any combination thereof. When software is used to implement the embodiments, the foregoing embodiments may be implemented completely or partially in a form of a computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and indicates that three relationships may exist. For example, A and/or B may indicate the following three cases: Only A exists, both A and B exist, and only B exists, where A and B may be singular or plural. In addition, the character "/" in this specification generally indicates an "or" relationship between associated objects, but may also indicate an "and/or" relationship. For details, refer to the context for understanding.

In this application, "at least one" means one or more, and "a plurality of" means two or more. "At least one of the following items (pieces)" or a similar expression thereof refers to any combination of these items, including one item (piece) or any combination of a plurality of items (pieces). For example, at least one (piece) of a, b, or c may represent: a, b, c, a-b, a-c, b-c, or a-b-c, where a, b, and c may be singular or plural.

It should be understood that serial numbers of the foregoing processes do not mean execution sequences in various embodiments of this application. The execution sequences of the processes should be determined according to functions and internal logic of the processes, and should not be construed as any limitation on the implementation processes of embodiments of this as defined by the appended claims.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this as defined by the appended claims.

It may be clearly understood by a person skilled in the art that, for the purpose of convenient and brief descriptions, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, the unit division is merely logical function division and there may be another division manner in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separated, and parts displayed as units may or may not be physical units, may be located in one position, or may be distributed on a plurality of network units. Some or all of the units may be selected based on an actual requirement to achieve the objective of the solution of this embodiment.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application, as solely defined by the claims.

## Claims

1. A communication method, comprising:
receiving, by a remote terminal, first indication information from a relay terminal, wherein the first indication information indicates that the relay terminal has received first data, and the first data is data sent to a first access network device, the first data includes a first identifier, and the first identifier includes a serial number of the first data, and wherein the first indication information includes the first identifier of the first data;
receiving, by the remote terminal, second indication information, wherein the second indication information indicates whether the first access network device receives the first data, wherein the second indication information includes the serial numbers of some or all packets in the first data;
determining, by the remote terminal, second data based on the second indication information, wherein the second data comprises data that is in the first data and that is not received by the first access network device; and
sending, by the remote terminal, the second data to the relay terminal or a second access network device.

2. The method according to claim 1, wherein the determining, by the remote terminal, second data based on the second indication information comprises:
determining, by the remote terminal, the second data based on the first indication information and the second indication information.

3. The method according to claim 1 or 2, wherein the method further comprises:
after the remote terminal switches from the first access network device to the second access network device, sending, by the remote terminal, the second data to the relay terminal or the second access network device.

4. The method according to claim 3, wherein the second indication information is from the relay terminal or the first access network device.

5. The method according to any one of claims 1 to 4, wherein the method comprises:
the first indication information is comprised in a radio link control, RLC, control protocol data unit, PDU, wherein the first indication information comprises a first identifier of the first data and reception acknowledgement information of the first data, and the reception acknowledgement information of the first data indicates whether the relay terminal successfully receives each piece of data in the first data; and
the second indication information is comprised in a packet data convergence protocol, PDCP, control PDU, wherein the second indication information comprises a second identifier of the first data, and the second indication information indicates whether the first access network device successfully receives each piece of data in the first data.

6. The method according to claim 5, wherein the method comprises:
the second identifier comprises a count, COUNT, value or a sequence number, SN, of the first data.

7. The method according to any one of claims 1 to 6, wherein the method comprises:
receiving, by the remote terminal, configuration information of a first function from the first access network device, wherein the first function is used by the remote terminal to determine third indication information based on the first indication information and/or the second indication information, and the third indication information indicates data that is in the first data and that is successfully received by the first access network device.

8. The method according to claim 7, wherein the method further comprises:
determining, by the remote terminal, the second data based on the third indication information.

9. A communication method, comprising:
receiving, by a first access network device, first indication information from a relay terminal, wherein the first indication information indicates that the relay terminal has received first data, and the first data is data sent to a remote terminal, the first data includes a first identifier, and the first identifier includes a serial number of the first data, and wherein the first indication information includes the first identifier of the first data;
receiving, by the first access network device, second indication information, wherein the second indication information indicates whether the remote terminal receives the first data, wherein the second indication information includes the serial numbers of some or all packets in the first data;
determining, by the first access network device, second data based on the second indication information, wherein the second data comprises data that is in the first data and that is not received by the remote terminal; and
sending, by the first access network device, the second data to the relay terminal or the remote terminal.

10. The method according to claim 9, wherein the determining, by the first access network device, second data based on the second indication information comprises:
determining, by the first access network device, the second data based on the first indication information and the second indication information.

11. The method according to claim 9 or 10, wherein the method further comprises:
after the remote terminal switches from the first access network device to a second access network device, sending, by the first access network device, the second data to the relay terminal or the remote terminal.

12. The method according to claim 11, wherein the second indication information is from the relay terminal or the remote terminal.

13. The method according to any one of claims 9 to 12, wherein the method comprises:
the first indication information is comprised in an RLC control PDU, wherein the first indication information comprises a first identifier of the first data and reception acknowledgement information of the first data, and the reception acknowledgement information of the first data indicates whether the relay terminal successfully receives data corresponding to each count value or sequence number in the first data; and
the second indication information is comprised in a PDCP control PDU, wherein the second indication information comprises a second identifier of the first data.

14. A communication apparatus (1700), comprising a processor(1701), wherein the processor (1701) is coupled to a memory (1702);
the memory (1702) is configured to store a computer program; and
the processor (1701) is configured to execute the computer program stored in the memory, so that the when communication apparatus (1700) is a remote terminal it performs the the communication method according to any one of claims 1 to 8, and when the communication apparatus is an access network device it performs the method of any one of claims 9 to 13.

15. A computer-readable storage medium, comprising a computer program or instructions, wherein when the computer program or the instructions are run on a computer comprised in a remote terminal cause the remote terminal to perform the method according to any one of claims 1 to 8, and when the computer program or the instructions are run on a computer comprised in an access network device cause the access network device to perform the method according to any one of claims 9 to 13.

## Patentansprüche

1. Kommunikationsverfahren, umfassend:
Empfangen erster Anzeigeinformationen von einem Relais-Endgerät durch ein entferntes Endgerät, wobei die ersten Anzeigeinformationen angeben, dass das Relais-Endgerät erste Daten empfangen hat, und die ersten Daten Daten sind, die an eine erste Zugangsnetzwerkvorrichtung gesendet wurden, die ersten Daten einen ersten Bezeichner beinhalten und der erste Bezeichner eine Seriennummer der ersten Daten beinhaltet, und wobei die ersten Anzeigeinformationen den ersten Bezeichner der ersten Daten beinhalten;
Empfangen zweiter Anzeigeinformationen durch das entfernte Endgerät, wobei die zweiten Anzeigeinformationen angeben, ob die erste Zugangsnetzwerkvorrichtung die ersten Daten empfängt, wobei die zweiten Anzeigeinformationen die Seriennummern einiger oder aller Pakete in den ersten Daten beinhalten;
Bestimmen zweiter Daten basierend auf den zweiten Anzeigeinformationen durch das entfernte Endgerät, wobei die zweiten Daten Daten umfassen, die in den ersten Daten enthalten sind und die nicht durch die erste Zugangsnetzwerkvorrichtung empfangen werden; und
Senden der zweiten Daten durch das entfernte Endgerät an das Relais-Endgerät oder eine zweite Zugangsnetzwerkvorrichtung.

2. Verfahren gemäß Anspruch 1, wobei das Bestimmen der zweiten Daten durch das entfernte Endgerät basierend auf den zweiten Anzeigeinformationen Folgendes umfasst:
Bestimmen der zweiten Daten durch das entfernte Endgerät basierend auf den ersten Anzeigeinformationen und den zweiten Anzeigeinformationen.

3. Verfahren gemäß Anspruch 1 oder 2, wobei das Verfahren ferner Folgendes umfasst:
nachdem das entfernte Endgerät von der ersten Zugangsnetzwerkvorrichtung auf die zweite Zugangsnetzwerkvorrichtung umgeschaltet hat, Senden der zweiten Daten durch das entfernte Endgerät an das Relais-Endgerät oder an die zweite Zugangsnetzwerkvorrichtung.

4. Verfahren gemäß Anspruch 3, wobei die zweiten Anzeigeinformationen von dem Relais-Endgerät oder der ersten Zugangsnetzwerkvorrichtung stammen.

5. Verfahren gemäß einem der Ansprüche 1 bis 4, wobei das Verfahren Folgendes umfasst:
die ersten Anzeigeinformationen in einer Funkverbindungssteuerungs-(radio link control, RLC-) Steuerprotokolldateneinheit (protocol data unit, PDU) umfasst sind, wobei die ersten Anzeigeinformationen einen ersten Bezeichner der ersten Daten und Empfangsbestätigungsinformationen der ersten Daten umfassen und die Empfangsbestätigungsinformationen der ersten Daten angeben, ob das Relais-Endgerät jedes Datenelement in den ersten Daten erfolgreich empfängt; und
die zweiten Anzeigeinformationen in einer Paketdatenkonvergenzprotokoll-(packet data convergence protocol, PDCP-)Steuer-PDU umfasst, wobei die zweiten Anzeigeinformationen einen zweiten Bezeichner der ersten Daten umfassen und die zweiten Anzeigeinformationen angeben, ob die erste Zugangsnetzwerkvorrichtung jedes Datenstück in den ersten Daten erfolgreich empfängt.

6. Verfahren gemäß Anspruch 5, wobei das Verfahren Folgendes umfasst:
der zweite Bezeichner einen Zählwert, COUNT, oder eine Sequenznummer, SN, der ersten Daten umfasst.

7. Verfahren gemäß einem der Ansprüche 1 bis 6, wobei das Verfahren Folgendes umfasst:
Empfangen von Konfigurationsinformationen einer ersten Funktion von der ersten Zugangsnetzwerkvorrichtung durch das entfernte Endgerät, wobei die erste Funktion durch das entfernte Endgerät verwendet wird, um basierend auf den ersten Anzeigeinformationen und/oder den zweiten Anzeigeinformationen dritte Anzeigeinformationen zu bestimmen, und die dritten Anzeigeinformationen Daten angeben, die in den ersten Daten enthalten sind und die von der ersten Zugangsnetzwerkvorrichtung erfolgreich empfangen wurden.

8. Verfahren gemäß Anspruch 7, wobei das Verfahren ferner Folgendes umfasst:
Bestimmen der zweiten Daten durch das entfernte Endgerät basierend auf den dritten Anzeigeinformationen.

9. Kommunikationsverfahren, umfassend:
Empfangen erster Anzeigeinformationen von einem Relais-Endgerät durch eine erste Zugangsnetzwerkvorrichtung, wobei die ersten Anzeigeinformationen angeben, dass das Relais-Endgerät erste Daten empfangen hat, und die ersten Daten Daten sind, die an ein entferntes Endgerät gesendet wurden, die ersten Daten einen ersten Bezeichner beinhalten und der erste Bezeichner eine Seriennummer der ersten Daten beinhaltet, und wobei die ersten Anzeigeinformationen den ersten Bezeichner der ersten Daten beinhalten;
Empfangen zweiter Anzeigeinformationen durch eine erste Zugangsnetzwerkvorrichtung, wobei die zweiten Anzeigeinformationen angeben, ob das entfernte Endgerät die ersten Daten empfängt, wobei die zweiten Anzeigeinformationen die Seriennummern einiger oder aller Pakete in den ersten Daten beinhalten;
Bestimmen zweiter Daten basierend auf den zweiten Anzeigeinformationen durch die erste Zugangsnetzwerkvorrichtung, wobei die zweiten Daten Daten umfassen, die in den ersten Daten enthalten sind und die nicht durch das entfernte Endgerät empfangen werden; und
Senden der zweiten Daten durch die erste Zugangsnetzwerkvorrichtung an das Relais-Endgerät oder das entfernte Endgerät.

10. Verfahren gemäß Anspruch 9, wobei das Bestimmen der zweiten Daten durch die erste Zugangsnetzwerkvorrichtung basierend auf den zweiten Anzeigeinformationen Folgendes umfasst:
Bestimmen der zweiten Daten durch die erste Zugangsnetzwerkvorrichtung basierend auf den ersten Anzeigeinformationen und den zweiten Anzeigeinformationen.

11. Verfahren gemäß Anspruch 9 oder 10, wobei das Verfahren ferner Folgendes umfasst:
nachdem das entfernte Endgerät von der ersten Zugangsnetzwerkvorrichtung auf eine zweite Zugangsnetzwerkvorrichtung umgeschaltet hat, Senden der zweiten Daten durch die erste Zugangsnetzwerkvorrichtung an das Relais-Endgerät oder das entfernte Endgerät.

12. Verfahren gemäß Anspruch 11, wobei die zweiten Anzeigeinformationen von dem Relais-Endgerät oder dem entfernten Endgerät stammen.

13. Verfahren gemäß einem der Ansprüche 9 bis 12, wobei das Verfahren Folgendes umfasst:
die ersten Anzeigeinformationen in einer RLC-Steuer-PDU umfasst sind, wobei die ersten Anzeigeinformationen einen ersten Bezeichner der ersten Daten und Empfangsbestätigungsinformationen der ersten Daten umfassen und die Empfangsbestätigungsinformationen der ersten Daten angeben, ob das Relais-Endgerät erfolgreich Daten empfängt, die jedem Zählwert oder jeder Sequenznummer in den ersten Daten entsprechen; und
die zweiten Anzeigeinformationen in einer PDCP-Steuer-PDU umfasst sind, wobei die zweiten Anzeigeinformationen einen zweiten Bezeichner der ersten Daten umfassen.

14. Kommunikationsgerät (1700), umfassend einen Prozessor (1701), wobei der Prozessor (1701) mit einem Speicher (1702) gekoppelt ist;
der Speicher (1702) dazu konfiguriert ist, ein Computerprogramm zu speichern; und
der Prozessor (1701) dazu konfiguriert ist, das in dem Speicher gespeicherte Computerprogramm auszuführen, sodass das Kommunikationsgerät (1700), wenn es ein entferntes Endgerät ist, das Kommunikationsverfahren gemäß einem der Ansprüche 1 bis 8 durchführt, und wenn das Kommunikationsgerät eine Zugangsnetzwerkvorrichtung ist, das Verfahren gemäß einem der Ansprüche 9 bis 13 durchführt.

15. Computerlesbares Speichermedium, das ein Computerprogramm oder Anweisungen umfasst, wobei, wenn das Computerprogramm oder die Anweisungen auf einem Computer ausgeführt werden, der in einem entfernten Endgerät umfasst ist, das entfernte Endgerät veranlasst, das Verfahren gemäß einem der Ansprüche 1 bis 8 durchzuführen, und wenn das Computerprogramm oder die Anweisungen auf einem Computer ausgeführt werden, der in einer Zugangsnetzwerkvorrichtung umfasst ist, die Zugangsnetzwerkvorrichtung veranlasst, das Verfahren gemäß einem der Ansprüche 9 bis 13 durchzuführen.

## Revendications

1. Procédé de communication, comprenant :
la réception, par un terminal distant, de premières informations d'indication provenant d'un terminal relais, dans lequel les premières informations d'indication indiquent que le terminal relais a reçu de premières données, et les premières données sont des données envoyées à un premier dispositif de réseau d'accès, les premières données comportent un premier identifiant, et le premier identifiant comporte un numéro de série des premières données, et dans lequel les premières informations d'indication comportent le premier identifiant des premières données ;
la réception, par le terminal distant, de deuxièmes informations d'indication, dans lequel les deuxièmes informations d'indication indiquent si le premier dispositif de réseau d'accès reçoit ou non les premières données, dans lequel les deuxièmes informations d'indication comportent les numéros de série de certains ou de tous les paquets dans les premières données ;
la détermination, par le terminal distant, de secondes données sur la base des deuxièmes informations d'indication, dans lequel les secondes données comprennent des données qui sont dans les premières données et qui ne sont pas reçues par le premier dispositif de réseau d'accès ; et
l'envoi, par le terminal distant, des secondes données au terminal relais ou à un second dispositif de réseau d'accès.

2. Procédé selon la revendication 1, dans lequel la détermination, par le terminal distant, de secondes données sur la base des deuxièmes informations d'indication comprend :
la détermination, par le terminal distant, des secondes données sur la base des premières informations d'indication et des deuxièmes informations d'indication.

3. Procédé selon la revendication 1 ou 2, dans lequel le procédé comprend également :
après que le terminal distant passe du premier dispositif de réseau d'accès au second dispositif de réseau d'accès, l'envoi, par le terminal distant, des secondes données au terminal relais ou au second dispositif de réseau d'accès.

4. Procédé selon la revendication 3, dans lequel les deuxièmes informations d'indication proviennent du terminal relais ou du premier dispositif de réseau d'accès.

5. Procédé selon l'une quelconque des revendications 1 à 4, dans lequel le procédé comprend :
les premières informations d'indication sont comprises dans une unité de données de protocole, PDU, de commande de commande de liaison radio, RLC, dans lequel les premières informations d'indication comprennent un premier identifiant des premières données et des informations d'accusé de réception des premières données, et les informations d'accusé de réception des premières données indiquent si le terminal relais reçoit avec succès ou non chaque élément de données dans les premières données ; et
les deuxièmes informations d'indication sont comprises dans une commande PDU de protocole de convergence de données par paquets, PDCP, dans lequel les deuxièmes informations d'indication comprennent un second identifiant des premières données, et les deuxièmes informations d'indication indiquent si le premier dispositif de réseau d'accès reçoit avec succès ou non chaque élément de données dans les premières données.

6. Procédé selon la revendication 5, dans lequel le procédé comprend :
le second identifiant comprend une valeur de comptage, COUNT, ou un numéro de séquence, SN, des premières données.

7. Procédé selon l'une quelconque des revendications 1 à 6, dans lequel le procédé comprend :
la réception, par le terminal distant, d'informations de configuration d'une première fonction provenant du premier dispositif de réseau d'accès, dans lequel la première fonction est utilisée par le terminal distant pour déterminer de troisièmes informations d'indication sur la base des premières informations d'indication et/ou des deuxièmes informations d'indication, et les troisièmes informations d'indication indiquent des données qui se trouvent dans les premières données et qui sont reçues avec succès par le premier dispositif de réseau d'accès.

8. Procédé selon la revendication 7, dans lequel le procédé comprend également :
la détermination, par le terminal distant, des secondes données sur la base des troisièmes informations d'indication.

9. Procédé de communication, comprenant :
la réception, par un premier dispositif de réseau d'accès, de premières informations d'indication provenant d'un terminal relais, dans lequel les premières informations d'indication indiquent que le terminal relais a reçu de premières données, et les premières données sont des données envoyées à un terminal distant, les premières données comportent un premier identifiant, et le premier identifiant comporte un numéro de série des premières données, et dans lequel les premières informations d'indication comportent le premier identifiant des premières données ;
la réception, par le premier dispositif de réseau d'accès, de deuxièmes informations d'indication, dans lequel les deuxièmes informations d'indication indiquent si le terminal distant reçoit les premières données, dans lequel les deuxièmes informations d'indication comportent les numéros de série de certains ou de tous les paquets dans les premières données ;
la détermination, par le premier dispositif de réseau d'accès, de secondes données sur la base des deuxièmes informations d'indication, dans lequel les secondes données comprennent des données qui sont dans les premières données et qui ne sont pas reçues par le terminal distant ; et
l'envoi, par le premier dispositif de réseau d'accès, des secondes données au terminal relais ou au terminal distant.

10. Procédé selon la revendication 9, dans lequel la détermination, par le premier dispositif de réseau d'accès, de secondes données sur la base des deuxièmes informations d'indication comprend :
la détermination, par le premier dispositif de réseau d'accès, des secondes données sur la base des premières informations d'indication et des deuxièmes informations d'indication.

11. Procédé selon la revendication 9 ou 10, dans lequel le procédé comprend également :
après que le terminal distant passe du premier dispositif de réseau d'accès à un second dispositif de réseau d'accès, l'envoi, par le premier dispositif de réseau d'accès, des secondes données au terminal relais ou au terminal distant.

12. Procédé selon la revendication 11, dans lequel les deuxièmes informations d'indication proviennent du terminal relais ou du terminal distant.

13. Procédé selon l'une quelconque des revendications 9 à 12, dans lequel le procédé comprend :
les premières informations d'indication sont comprises dans une PDU de commande RLC, dans lequel les premières informations d'indication comprennent un premier identifiant des premières données et des informations d'accusé de réception des premières données, et les informations d'accusé de réception des premières données indiquent si le terminal relais reçoit avec succès ou non des données correspondant à chaque valeur de comptage ou numéro de séquence dans les premières données ; et
les deuxièmes informations d'indication sont comprises dans une PDU de commande PDCP, dans lequel les deuxièmes informations d'indication comprennent un second identifiant des premières données.

14. Appareil de communication (1700), comprenant un processeur (1701), dans lequel le processeur (1701) est couplé à une mémoire (1702) ;
la mémoire (1702) est configurée pour stocker un programme informatique ; et
le processeur (1701) est configuré pour exécuter le programme informatique stocké dans la mémoire, de sorte que lorsque l'appareil de communication (1700) est un terminal distant il réalise le procédé de communication selon l'une quelconque des revendications 1 à 8, et lorsque l'appareil de communication est un dispositif de réseau d'accès, il réalise le procédé selon l'une quelconque des revendications 9 à 13.

15. Support de stockage lisible par ordinateur, comprenant un programme informatique ou des instructions, dans lequel lorsque le programme informatique ou les instructions sont exécutées sur un ordinateur compris dans un terminal distant amènent le terminal distant à réaliser le procédé selon l'une quelconque des revendications 1 à 8, et lorsque le programme informatique ou les instructions sont exécutés sur un ordinateur compris dans un dispositif de réseau d'accès amènent le dispositif de réseau d'accès à réaliser le procédé selon l'une quelconque des revendications 9 à 13.
